# EUROPEAN PATENT SPECIFICATION

(11) **EP 3 843 355 B1**
(45) Date of publication and mention of the grant of the patent: **18.12.2024**
(21) Application number: 19860362.3
(22) Date of filing: 08.07.2019
(51) Int. Cl.: H04L 9/40, H04L 9/30, H04L 9/32, H04L 9/00

(54) **METHOD FOR SENDING MESSAGE, METHOD FOR VERIFYING MESSAGE, AND DEVICES**
VERFAHREN ZUM SENDEN EINER NACHRICHT, VERFAHREN ZUM VERIFIZIEREN EINER NACHRICHT UND VORRICHTUNGEN
PROCÉDÉ D'ENVOI DE MESSAGE, PROCÉDÉ DE VÉRIFICATION DE MESSAGE, ET DISPOSITIFS

(30) Priority: 12.09.2018 CN 201811063947
(43) Date of publication of application: 30.06.2021
(73) Proprietor: HUAWEI TECHNOLOGIES CO., LTD., Shenzhen, Guangdong 518129 (CN)
(72) Inventor: ZHANG, Yuhai, Shenzhen, Guangdong 518129 (CN); YANG, Yanjiang, Shenzhen, Guangdong 518129 (CN); WANG, Gailiang, Shenzhen, Guangdong 518129 (CN)
(74) Representative: Maiwald GmbH
(86) International application number: PCT/CN2019/095086
(87) International publication number: WO 2020/052335

(56) References cited:
- EP-A1- 1 912 376
- EP-A1- 2 850 862
- CN-A- 101 729 248
- CN-A- 105 187 376
- KR-A- 20150 024 117
- US-A1- 2018 234 248
- VIGHNESH N V ET AL: "A novel sender authentication scheme based on hash chain for Vehicular Ad-Hoc Networks", WIRELESS TECHNOLOGY AND APPLICATIONS (ISWTA), 2011 IEEE SYMPOSIUM ON, IEEE, 25 September 2011 (2011-09-25), pages 96 - 101, XP032028720, ISBN: 978-1-4577-1496-2, DOI: 10.1109/ISWTA.2011.6089388

## Description

### TECHNICAL FIELD

This application relates to the communications field, and in particular, to a message sending method, a message verification method, a message sending apparatus, a message verification apparatus, computer program products, and storage products.

### BACKGROUND

With continuous development of information technologies, intelligent devices such as smartphones, smart TVs, smart speakers, and smart refrigerators constantly flood into people's lives, and more and more people feel the convenience brought by intelligentization. Simultaneously, people pay more attention to vehicle intelligentization. Research on vehicle exterior scenario intelligentization cannot be separated from obtaining of vehicle exterior environment data. Any vehicle may obtain vehicle exterior environment data shared by another vehicle. During implementation, when collecting vehicle exterior environment data, each vehicle may send the vehicle exterior environment data to a central server. The central server receives the vehicle exterior environment data, and may draw a map. The map includes the received vehicle exterior environment data sent by each vehicle. In this way, each vehicle may download the map from the central server, to obtain the vehicle exterior environment data shared by each vehicle.

In a process of implementing this application, the prior art has the following disadvantages:
Currently, shared vehicle exterior environment data depends on a central server, and a process of obtaining data from the central server by a vehicle is affected by a network status. Consequently, there is a specific network delay.

WO 2013/172750 A1 discloses a device for communicating with a network. The device receives a series of paging messages from a serving node in the network, where each paging message includes identification and authentication information sufficient to identify at least one device and authenticate the message, at least some of the information having been protected according to a sequence such that it varies between successive paging messages. The device verifies the protected part of the information using a cryptographic function and knowledge of the sequence and identifies whether the information indicates that message is an authentic message intended for that device. The device may act in response to the received paging message. In particular, a serving node sends an initialization message including a starting index for a hash chain and a first value. When the serving node wishes to wake up one of several devices, it broadcasts a paging message in a time slot watched by said devices. The paging message will be sent to all devices in the network, but includes a device identifier for a certain device and instructions to said device to wake up, together with a next hash value in the sequence. The control unite of the device confirms the next hash value and that the message has therefore really come from the serving node.

### SUMMARY

Embodiments of this application provide a message sending method, a message verification method, a message sending apparatus a message verification apparatus, and corresponding computer program products and storag products, to improve message transmission efficiency. The inventior is set out in the appended claims. In the following, parts of the description and drawings referring to embodiments which are not covered by the claims are not presented as embodiments of the invention, but as examples useful for understanding the invention. The technical solutions are as follows.

According to a first aspect, this application provides a message sending method. In the method, a transmit end obtains to-be-sent target data, where the target data is data to be sent in a current sending period after the first piece data is sent; the transmit end obtains, from a hash chain based on a sending sequence number of the target data in the current sending period, a node corresponding to the target data, where a quantity of nodes included in the hash chain is equal to a quantity of pieces of data allowed to be sent in the current sending period; a hash operation is performed on the target data and the node corresponding to the target data, to obtain a first verification code, where the first verification code is used by a receive end to verify the target data; and a first message is sent, where the first message includes the target data, the node corresponding to the target data, the first verification code, and the sending sequence number of the target data. The transmit end may directly send the first message to the receive end. In this way, the first message may not be forwarded by a server, to reduce a transmission delay of the first message, and improve message sending efficiency. In addition, the transmit end performs the hash operation on the target data and the node corresponding to the target data, and the hash operation requires a few computing resources, to reduce message sending costs. The first message further includes the node corresponding to the target data, so that the receive end can verify the node corresponding to the target data, to improve message transmission security, and a node verification speed is relatively high, so that a verification speed of the receive end is improved.

According to this application, a tail node in the hash chain is randomly generated; and a hash operation is performed a node hᵢ₋₁ in the hash chain, to obtain a node hᵢ in the hash chain, where i = 1, 2, ..., or N, N + 1 is the quantity of pieces of data allowed to be sent in the current sending period, a node h₀ is the tail node, and a node h_{N} is a head node in the hash chain. Because the hash operation is performed on the node hᵢ₋₁ in the hash chain, to obtain the node hᵢ in the hash chain, the hash chain has a unidirectional mapping characteristic. The head node corresponds to the first piece of data. Nodes corresponding to all data sent by the transmit end after the first piece of data is sent are consecutive nodes.

According to the first aspect, when it is determined, based on the sending sequence number of the target data, that the target data is the second piece of data to be sent in the current sending period, the head node in the hash chain is obtained and is used as the node corresponding to the target data. Alternatively according to the first aspect, when it is determined, based on the sending sequence number of the target data, that the target data is data to be sent after the second piece of data, a fourth node that is located before a third node and that is adjacent to the third node in the hash chain is obtained and is used as the node corresponding to the target data, where the third node is a node that is sent last time in the hash chain. In this way, nodes corresponding to all data sent by the transmit end after the first piece of data is sent may be consecutive nodes, and the receive end may verify data continuity based on the nodes corresponding to all the data, to ensure data transmission security.

In a possible implementation of the first aspect, the first message further includes a first timestamp at which the target data is sent. In this way, the receive end can verify timeliness of a received message by using the first timestamp, to further improve message transmission security.

In a possible implementation of the first aspect, the first piece of data and the head node in the hash chain are signed by using private key information, to obtain a second verification code, where the second verification code is used by the receive end to verify the first piece of data; and a second message is sent, where the second message includes verification information, the first piece of data, the second verification code, and a node corresponding to the first piece of data, and the verification information includes public key information matching the private key information. The transmit end signs the first piece of data and the head node in the hash chain by using the private key information, to obtain the second verification code. This improves message transmission security.

In a possible implementation of the first aspect, first digest information is generated based on the first piece of data and the head node in the hash chain; and then, the first digest information is signed by using the private key information, to obtain the second verification code. Signing the first digest information can reduce a calculation amount required for signing.

In a possible implementation of the first aspect, the second message further includes a second timestamp at which the target data is sent. In this way, the receive end can verify timeliness of a received message by using the second timestamp, to further improve message transmission security.

In a possible implementation of the first aspect, the verification information is a digital certificate, and the digital certificate includes the public key information; or the verification information is the public key information, and the public key information is identity information of the transmit end.

According to a second aspect, this application provides a message verification method. In the method, a receive end receives a first message, where the first message includes target data, a node in a hash chain corresponding to the target data, a first verification code, and a sending sequence number of the target data in a target sending period, the target data is data sent in the target sending period after the first piece of data is sent, and a quantity of nodes included in the hash chain is equal to a quantity of pieces of data allowed to be sent in the target sending period; and the target data is verified based on the node corresponding to the target data, the sending sequence number corresponding to the target data, and the first verification code. The receive end may directly receive a message sent by the transmit end. In this way, the message may not be forwarded by a server, to reduce a transmission delay of the message, and improve message sending efficiency. In addition, the message includes the node in the hash chain corresponding to the target data. In this way, the receive end can ensure message transmission security by verifying the node.

In a possible implementation of the second aspect, based on the sending sequence number of the target data, a node corresponding to received first data is determined, where the first data is the latest data sent by a transmit end before the target data is sent; and based on the node corresponding to the first data, the node corresponding to the target data is verified. In this way, the receive end verifies the node corresponding to the target data, to ensure message transmission security, and a node verification speed is relatively high, so that verification efficiency is improved. When the verification on the node corresponding to the target data succeeds, a hash operation is performed on the target data and the node corresponding to the target data, to obtain a first hash result; and when the first hash result matches the first verification code, the verification on the target data succeeds. In this way, the receive end only needs to perform the hash operation on the target data and the node corresponding to the target data, and the hash operation requires a few computing resources, to reduce verification costs.

In a possible implementation of the second aspect, the first data is the first piece of data, and when the node corresponding to the target data is equal to the head node corresponding to the first piece of data, the verification on the node corresponding to the target data succeeds. In this way, when the target data is the second piece of data, it only needs to verify whether the node of the target data is equal to the head node corresponding to the first piece of data. The verification operation is simple, a few computing resources are required, and a verification speed is high.

In a possible implementation of the second aspect, the first data is the data sent in the target sending period after the first piece of data is sent. A hash operation is performed on the node corresponding to the target data, to obtain a second hash result; and when the second hash result is equal to the node corresponding to the first data, the verification on the node corresponding to the target data succeeds. The hash operation requires a relatively small calculation amount. In this way, the verification operation is simple, a few computing resources are required, and a verification speed is high.

In a possible implementation of the second aspect, the first message further includes a first timestamp at which the target data is sent. A first difference between the first timestamp and a third timestamp at which the target data is received is obtained; and when the first difference does not exceed a first threshold, the target data is verified based on the node corresponding to the target data, the sending sequence number corresponding to the target data, and the first verification code. In this way, the receive end can verify timeliness of a received message by using the first timestamp and the third timestamp, to further improve message transmission security.

In a possible implementation of the second aspect, a second message is received, where the second message includes the first piece of data, the head node in the hash chain corresponding to the first piece of data, a second verification code, and verification information, and the verification information includes public key information; and the first piece of data is verified based on the second verification code and the public key information. Because the first piece of data is verified based on the second verification code and the public key information, the transmit end may sign the first piece of data by using private key information, to improve transmission security of the first piece of data.

In a possible implementation of the second aspect, the second verification code is decrypted by using the public key information, to obtain first digest information; second digest information is generated based on the first piece of data and the head node corresponding to the first piece of data; and when the first digest information matches the second digest information, the verification on the first piece of data succeeds. Because the receive end decrypts the second verification code by using the public key information, the transmit end may perform encryption by using private key information when the first piece of data is sent, to improve message security.

In a possible implementation of the second aspect, the verification information is a digital certificate, and the digital certificate includes the public key information. The digital certificate is verified by using issuer public key information of the digital certificate; and after the verification on the digital certificate succeeds, the second verification code is decrypted by using the public key information, to obtain the first digest information. The digital certificate includes the public key information, and the digital certificate is verified, and therefore, when security of the digital certificate is verified, decryption by using the public key information in the digital certificate may further improve security.

In a possible implementation of the second aspect, the second message is cached in a message cache area; when a message receiving time length reaches a second threshold, digital certificates in received Z messages are verified, where the Z messages are messages that include the digital certificates and that are cached in the message cache area, and Z is an integer greater than 0; and when the verification on the digital certificates in the Z messages fails, the digital certificates are verified by using issuer public key information of the digital certificates. In this way, batch verification on a plurality of digital certificates can be implemented, to improve verification efficiency. In addition, a relatively large quantity of computing resources for one-to-one verification on each digital certificate is greater than a quantity of computing resources for batch verification, and therefore, occupation on the computing resources can be reduced.

In a possible implementation of the second aspect, a hash operation is performed on the digital certificates in the Z messages, to obtain hash values of the digital certificates in the Z messages; a product of the hash values of the digital certificates in the Z messages is calculated, to obtain a first value; a product of digital signatures in the digital certificates in the Z messages is calculated, to obtain a second value; and when the e^{th} power of the second value is equal to the first value, the verification on the digital certificates in the Z messages succeeds. Therefore, batch verification on M digital certificates is implemented.

In a possible implementation of the second aspect, the second message further includes a second timestamp at which the first piece of data is sent. A second difference between the second timestamp and a fourth timestamp at which the first piece of data is received is obtained; and when the second difference does not exceed the first threshold, the first piece of data is verified based on the second verification code and the public key information. In this way, the receive end can verify timeliness of a received message by using the second timestamp and the fourth timestamp, to further improve message transmission security.

In a possible implementation of the second aspect, the second message is cached in the message cache area; when the message receiving time length reaches the second threshold, received Z second messages are verified simultaneously, where the Z second messages are second messages cached in the message cache area; and when the verification simultaneously performed on the Z second messages fails, the first piece of data is verified based on the second verification code and the public key information. In this way, batch verification on a plurality of messages can be implemented, to improve verification efficiency.

According to a third aspect, an embodiment of this application provides a message sending apparatus, configured to perform the method according to the first aspect or any possible implementation of the first aspect. Specifically, the apparatus includes units configured to perform the method according to the first aspect or any possible implementation of the first aspect.

According to a fourth aspect, an embodiment of this application provides a message verification apparatus, configured to perform the method according to the second aspect or any possible implementation of the second aspect. Specifically, the apparatus includes units configured to perform the method according to the second aspect or any possible implementation of the second aspect.

According to a fifth aspect, an embodiment of this application provides a message sending apparatus. The apparatus includes a transceiver, a processor, and a memory. The transceiver, the processor, and the memory may be connected to each other by using a bus system. The memory is configured to store a program, an instruction, or code. The processor is configured to execute the program, the instruction, or the code in the memory, to implement the method according to the first aspect or any possible implementation of the first aspect.

According to a sixth aspect, an embodiment of this application provides a message verification apparatus. The apparatus includes a transceiver, a processor, and a memory. The transceiver, the processor, and the memory may be connected to each other by using a bus system. The memory is configured to store a program, an instruction, or code. The processor is configured to execute the program, the instruction, or the code in the memory, to implement the method according to the second aspect or any possible implementation of the second aspect.

According to a seventh aspect, an embodiment of this application provides a computer program product. The computer program product includes a computer program stored in a computer-readable storage medium, and the computer program is loaded by a processor to implement the method according to the first aspect, the second aspect, any possible implementation of the first aspect, or any possible implementation of the second aspect.

According to an eighth aspect, an embodiment of this application provides a nonvolatile computer-readable storage medium. The nonvolatile computer-readable storage medium is configured to store a computer program. The computer program is loaded by a processor to execute an instruction according to the first aspect, the second aspect, any possible implementation of the first aspect, or any possible implementation of the second aspect.

According to a ninth aspect, an embodiment of this application provides a chip. The chip includes a programmable logic circuit and/or a program instruction, and when the chip runs, the chip is configured to implement the method according to the first aspect, the second aspect, any possible implementation of the first aspect, or any possible implementation of the second aspect.

According to a tenth aspect, an embodiment of this application provides a communications system, including the apparatus according to the third aspect or the fifth aspect and the apparatus according to the fourth aspect or the sixth aspect.

### BRIEF DESCRIPTION OF DRAWINGS

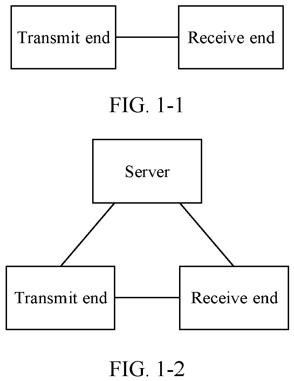

FIG. 1-1 is a schematic structural diagram of a communications system according to an embodiment of this application;
FIG. 1-2 is a schematic structural diagram of another communications system according to an embodiment of this application;
FIG. 2-1 is a flowchart of a message sending method according to an embodiment of this application;
FIG. 2-2 is a schematic structural diagram of a digital certificate according to an embodiment of this application;

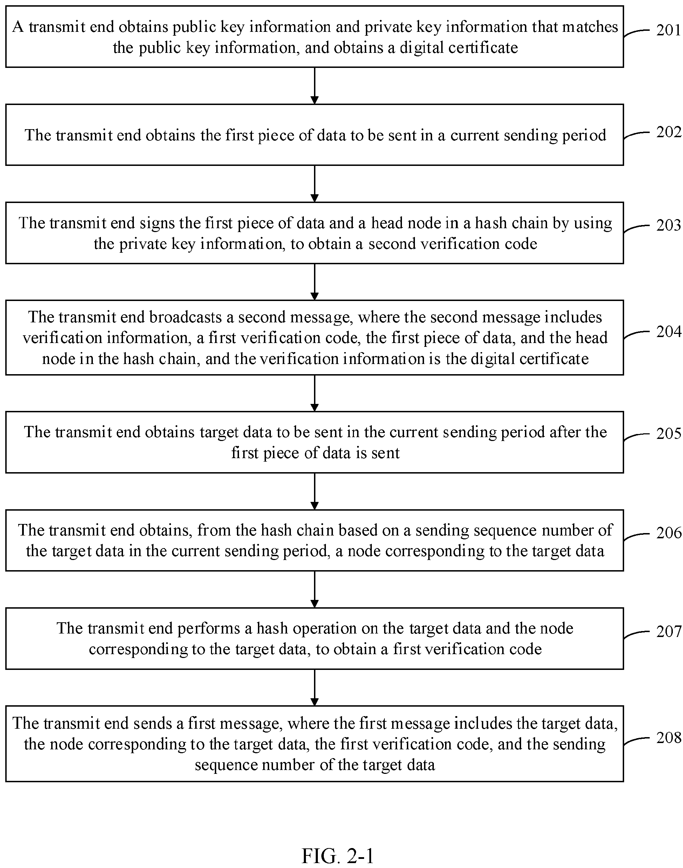

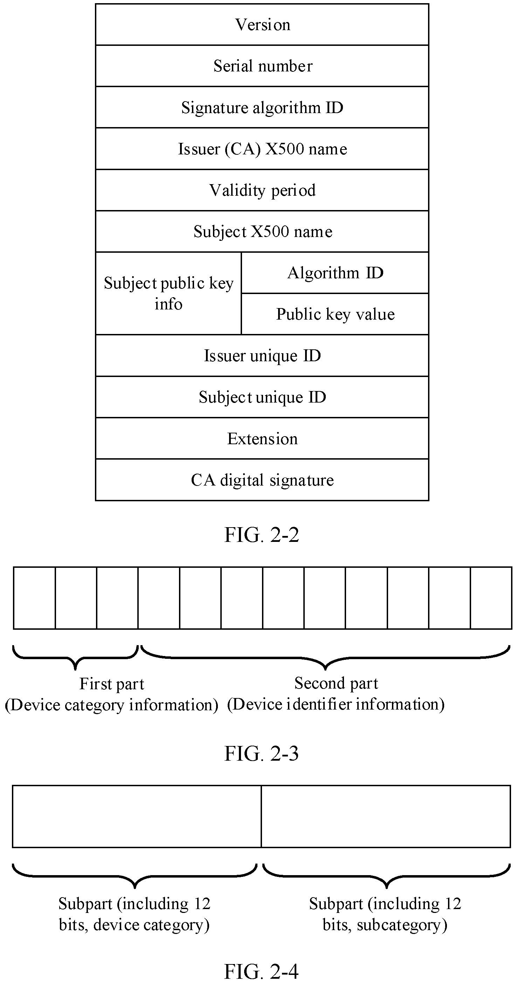

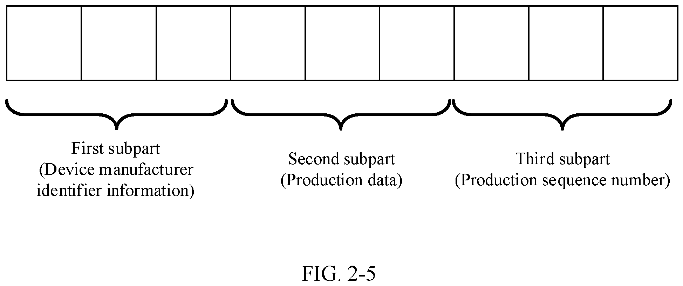

FIG. 2-3 is a schematic structural diagram of identity information according to an embodiment of this application;
FIG. 2-4 is a schematic structural diagram of device category information according to an embodiment of this application;
FIG. 2-5 is a schematic structural diagram of device identifier information according to an embodiment of this application;

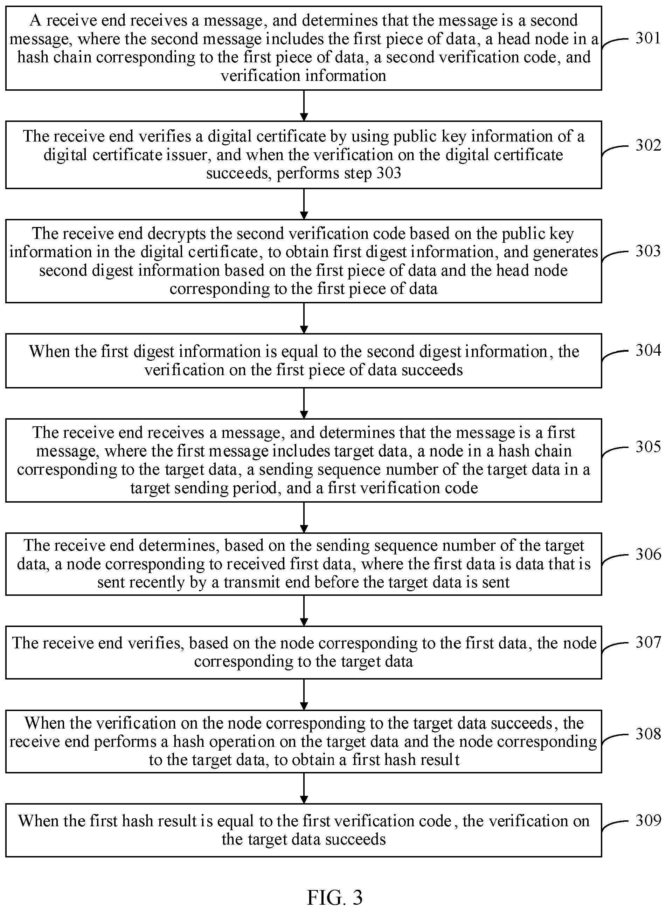

FIG. 3 is a flowchart of a message verification method according to an embodiment of this application;

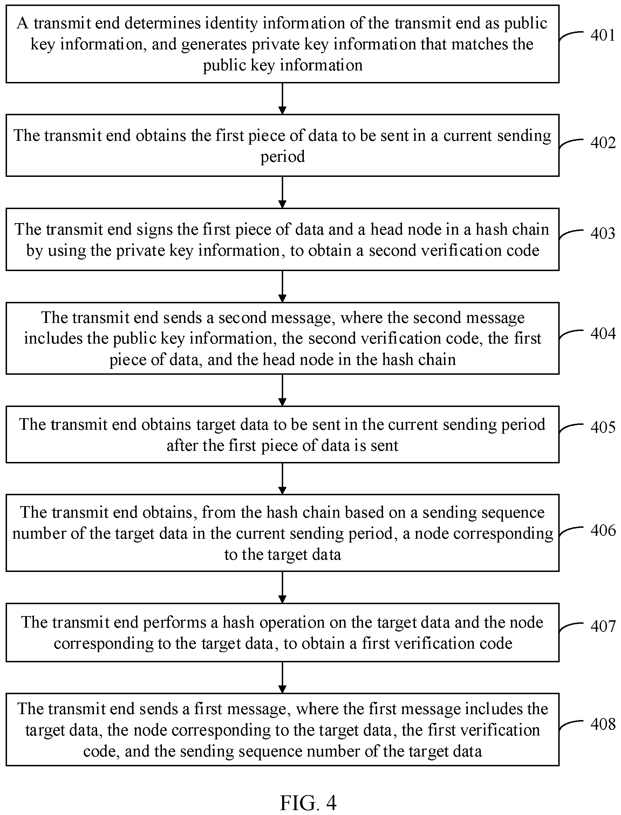

FIG. 4 is a flowchart of another message sending method according to an embodiment of this application;

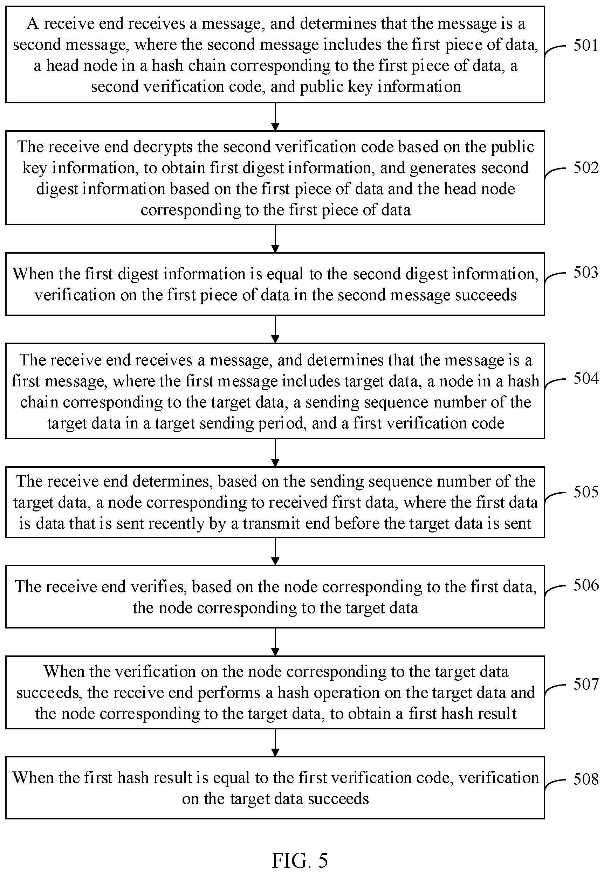

FIG. 5 is a flowchart of another message verification method according to an embodiment of this application;

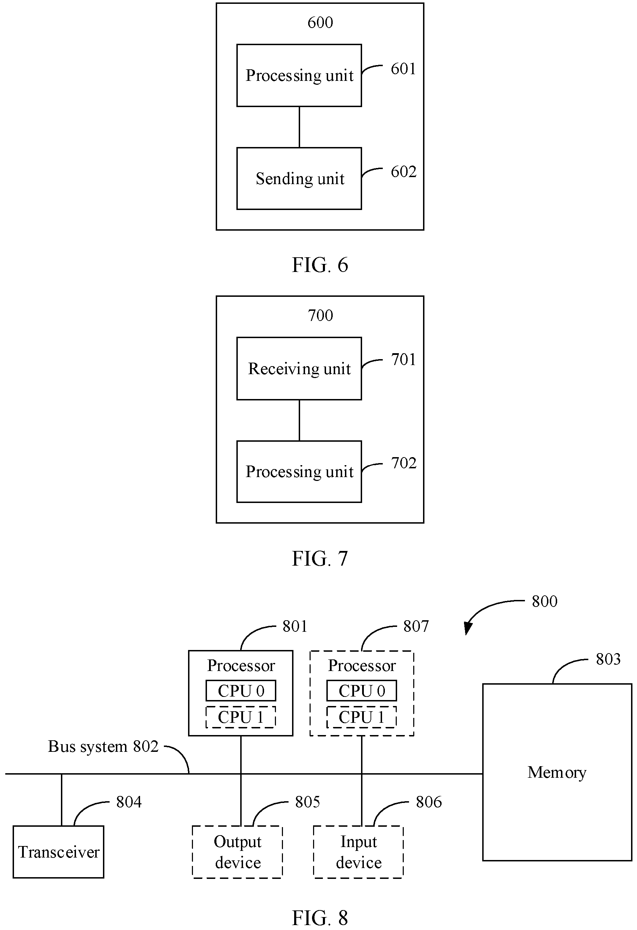

FIG. 6 is a schematic structural diagram of a message sending apparatus according to an embodiment of this application;
FIG. 7 is a schematic structural diagram of a message verification apparatus according to an embodiment of this application;
FIG. 8 is a schematic structural diagram of another message sending apparatus according to an embodiment of this application;

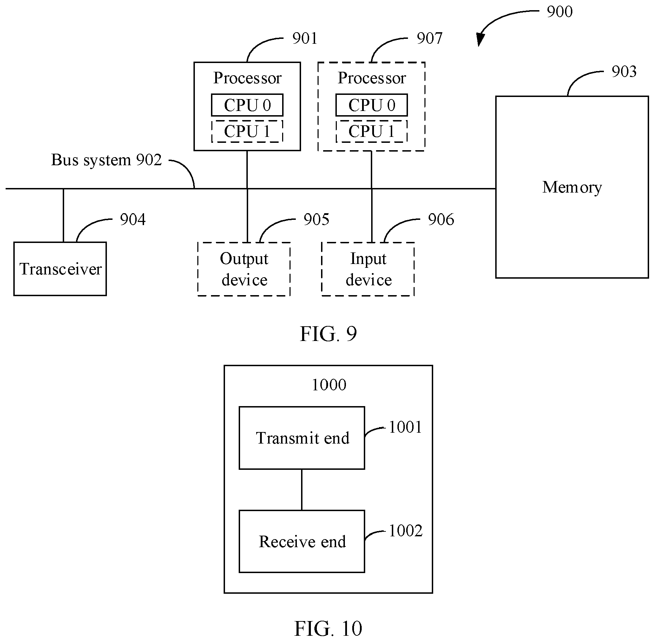

FIG. 9 is a schematic structural diagram of another message verification apparatus according to an embodiment of this application; and
FIG. 10 is a schematic structural diagram of another communications system according to an embodiment of this application.

### DESCRIPTION OF EMBODIMENTS

The following further describes in detail implementations of this application with reference to the accompanying drawings. Figures 2-2 to 2-5 present examples for a better understanding.

Referring to FIG. 1-1, an embodiment of this application provides a communications system. The communications system includes:
a transmit end and a receive end, where a communication connection may be established between the transmit end and the receive end; and
the transmit end may obtain to-be-sent data; to improve efficiency of sending data, the transmit end may directly broadcast the data to the receive end, so that the data does not need to be forwarded to the receive end by a central server located on a network side, to reduce a transmission delay of the data and improve the efficiency of sending the data.

When the transmit end directly broadcasts the data to the receive end, the transmit end defines a sending period, and the sending period is periodically cyclic. When the data is the first piece of data to be sent in a current sending period, the transmit end signs the first piece of data and a head node in a hash chain by using private key information, to obtain a second verification code. Then, the transmit end broadcasts a second message, where the second message includes a verification message, the second verification code, the first piece of data, and the head node in the hash chain, and the verification message includes public key information that matches the private key information. Alternatively, when the data is another target data other than the first piece of data to be sent in the current sending period, the transmit end obtains, from the hash chain, a node corresponding to the target data, performs a hash operation on the target data and the node corresponding to the target data to obtain a first verification code, and broadcasts the first message, where the first message includes the first verification code, the target data, the node corresponding to the target data, and a sending sequence number of the target data.

In this way, the receive end may receive a message (the message may be the first message or the second message) broadcast by the transmit end. When the message is the second message, the first piece of data is verified based on the verification message and the second verification code; or when the message is the first message, the target data is verified based on the node corresponding to the target data, the first verification code, and the sending sequence number corresponding to the target data.

A quantity of nodes included in the hash chain is equal to a quantity of pieces of data allowed to be sent in one sending period. For any two adjacent nodes in the hash chain, for ease of description, the any two adjacent nodes are respectively referred to as a first node and a second node, the first node is close to the head node in the hash chain, and the first node is deduced based on the second node.

Optionally, one sending period may correspond to one hash chain. In this way, the transmit end may generate a hash chain in each sending period before the first piece of data is sent. Alternatively, m sending periods may correspond to one hash chain, where m is an integer greater than 1. In this way, the transmit end generates a hash chain in one sending period before the first piece of data is sent; after the hash chain is generated, the transmit end does not need to generate a hash chain in subsequent m - 1 consecutive sending periods; and until a (m + 1)^{th} sending period, the transmit end generates a hash chain before the first piece of data is sent.

The foregoing communications system may be applied to a scenario such as an intelligent transportation system. In the intelligent transportation system, both the transmit end and the receive end may be means of transportation. Optionally, the transmit end or the receive end may be a vehicle-mounted terminal mounted or integrated in the means of transportation.

It is assumed that, when the means of transportation is a vehicle, the vehicle may obtain data on a road. The data may be vehicle exterior environment data, or the like. The vehicle exterior environment data may be road condition information, or the like. Alternatively, the vehicle exterior environment data may be data input by a driver of the vehicle into the vehicle. For example, a segment of data input by a user is "a traffic accident occurs at a road intersection ahead", and the segment of data is the vehicle exterior environment data. The vehicle may broadcast the data to another vehicle in the foregoing manner, to share the data with the another vehicle. For example, the vehicle may broadcast obtained road condition information to the another vehicle, to share obtained road condition data with the another vehicle.

Optionally, in addition to the vehicle, the means of transportation may be a bicycle, a balanced vehicle, a drone, or the like. In addition to the means of transportation, the transmit end or the receive end may be a wearable device, a smart home device, a mobile terminal, or the like. For example, when the transmit end or the receive end is the wearable device, the transmit end or the receive end may be a smart band, a watch, a headset, glasses, or the like; when the transmit end or the receive end is the smart home device, the transmit end or the receive end may be a sound box, a television, a refrigerator, a color television, a washing machine, a toilet, a router, a light fitting, an air conditioner, or the like; or when the transmit end or the receive end is the mobile terminal, the transmit end or the receive end may be a mobile phone, a tablet computer, a notebook computer, or the like.

Optionally, referring to FIG. 1-2, the communications system may further include a server. The transmit end and the receive end may separately establish communication connections to the server. The transmit end and/or the receive end may obtain content such as public key information and private key information of a digital certificate issuer from the server. The transmit end may send a message by using the obtained content, and the receive end may receive the message by using the obtained content. For a detailed description process, refer to related content in the following embodiment, which is not described herein.

Referring to FIG. 2-1, an embodiment of this application provides a message sending method. The method may be applied to the communications system shown in FIG. 1-1. An execution body of the method is the transmit end of the communications system, and the method includes the following steps.

Step 201: The transmit end obtains public key information and private key information that matches the public key information, and obtains a digital certificate.

The transmit end may obtain, by using a public key infrastructure system (public key infrastructure, PKI) mechanism, the public key information and the private key information that matches the public key information. Optionally, during implementation, a process of obtaining the public key information and the private key information may be as follows: The transmit end randomly generates a string of information, uses the information as the public key information, and then generates private key information that matches the public key information.

The digital certificate includes a digital signature and another content other than the digital signature. The another content may include content such as the public key information and identity information of the transmit end.

Referring to FIG. 2-2, the digital certificate includes a plurality of fields, and the digital signature, the public key information, and the identity information of the transmit end may be carried in different fields in the digital certificate. For example, in the digital certificate shown in FIG. 2-2, a CA digital signature (CA Digital Signature) field carries the digital signature, a subject public key information (Subject Public Key Info) field carries the public key information, and a subject unique identifier (Subject Unique ID) carries the identity information of the transmit end.

The digital certificate may further include another field, for example, referring to FIG. 2-2, and may further include a version (Version) field, a serial number (Serial Number) field, a signature algorithm identifier (Signature Algorithm ID) field, an issuer (CA) X500 name (Issuer (CA) X500 Name), a validity period (Validity Period) field, a subject X500 name (Subject X500 Name) field, an algorithm identifier (Algorithm ID) field, a public key value (Public Key Value) field, an issuer unique identifier (Issuer Unique ID) field, and an extension (Extension) field.

The transmit end may first generate the another part other than the digital signature in the digital certificate, perform a hash operation on the another part to obtain a hash value, encrypt the hash value by using private key information of the digital certificate issuer, to obtain a digital signature, and form the digital certificate by using the digital signature and the another part.

Optionally, the transmit end may obtain private key information of a certificate issuer from the server in advance, and then locally store the private key information of the certificate issuer. Therefore, the transmit end may directly encrypt the hash value by using the locally stored private key information of the certificate issuer. Alternatively, the transmit end may obtain private key information of a certificate issuer from the server, and encrypt the hash value by using the private key information of the certificate issuer.

Optionally, the identity information of the transmit end may include device category information of the transmit end and device identifier information used to uniquely identify the transmit end.

Optionally, the device category information of the transmit end may include a device category to which the transmit end belongs and a specific subcategory included in the device category to which the transmit end belongs.

A plurality of device categories may be defined, and each device category is defined to include a plurality of subcategories. For example, referring to the following Table 1, device categories in the following Table 1 include means of transportation, a wearable device, smart home, a mobile terminal, and the like. The means of transportation includes a plurality of subcategories such as a vehicle, a bicycle, and a balanced vehicle. The wearable device includes a plurality of subcategories such as a smart band, a watch, a headset, and glasses. The smart home includes a plurality of subcategories such as a speaker, a television, a refrigerator, a color television, a washing machine, a toilet, a router, a light fitting, and an air conditioner. The mobile terminal includes a plurality of subcategories such as a mobile phone, a tablet computer, and a notebook computer.

**Table 1**

| Device category | Subcategory |
|---|---|
| Means of transportation | Vehicle |
| | Bicycle |
| | Balanced vehicle |
| | Drone |
| | ... |
| Wearable device | Smart band |
| | Watch |
| | Headset |
| | Glasses |
| | ... |
| Smart home | Speaker |
| | Television |
| | Refrigerator |
| | Color television |
| | Washing machine |
| | Toilet |
| | Router |
| | Light fitting |
| | Air conditioner |
| | ... |
| Mobile device | Mobile phone |
| | Tablet computer |
| | Notebook computer |
| | ... |

Optionally, the device identifier information may include device manufacturer identifier information, a device production date, a production sequence number, and the like of the transmit end.

Optionally, the identity information of the transmit end may include a first part and a second part. The first part includes at least one byte, and the first part is the device category information of the transmit end. The first part may be further divided into two subparts, where one subpart includes a plurality of bits, and the subpart is a device category to which the transmit end belongs; and the other subpart includes a plurality of bits, and the other subpart is a subcategory to which the transmit end belongs. The second part includes at least one byte, and the second part is the device identifier information of the transmit end. The second part may be further divided into a first subpart, a second subpart, and a third subpart, where the first subpart includes at least one byte, and the first subpart is the device manufacturer identifier information of the transmit end; the second subpart includes at least one byte, and the second subpart is the device production date of the transmit end; and the third subpart includes at least one byte, and the third subpart is the production sequence number of the transmit end.

For example, as shown in FIG. 2-3, it is assumed that the identity information may include 12 bytes. The first part includes first three bytes, that is, the first three bytes may be the device category information of the transmit end, and the second part includes last nine bytes, that is, the last nine bytes may be the device identifier information. The first part includes two subparts, referring to FIG. 2-4, in this example, it is assumed that one subpart includes the first 12 bits of the first part, that is, the first 12 bits may be the device category to which the transmit end belongs; and the other subpart includes the last 12 bits of the first part, that is, the last 12 bits may be the subcategory of the device category to which the transmit end belongs. Referring to FIG. 2-5, the second part includes a first subpart, a second subpart, and a third subpart, and it is assumed that the first subpart includes first three bytes of the second part, that is, the first three bytes may be the device manufacturer identifier information of the transmit end; the second subpart includes middle three bytes of the second part, that is, the middle three bytes may be the production date of the transmit end; and the third subpart includes the last three bytes of the second part, that is, the last three bytes may be the production sequence number of the transmit end; in this way, the 12 bytes form the identity information of the transmit end.

Step 202: The transmit end obtains the first piece of data to be sent in a current sending period.

Optionally, the first piece of data may be data input by a user into the transmit end, and therefore, the transmit end may receive the first piece of data input by the user.

For the transmit end, the sending period is periodically cyclic. Optionally, the transmit end may define a period length, and may implement the sending period by using a timer. For example, the transmit end may start a timer, where the timer is set to start timing from zero, indicating that a sending period starts; when time counted by the timer reaches the period length, the timer is reset to start timing from zero, indicating that the sending period ends and another sending period starts; and this process repeats, to implement a periodical circulation of the sending period.

For each sending period, the transmit end may record a sending sequence number of data that has been sent in the sending period. Therefore, in the current sending period, when the transmit end receives the data input by the user, the transmit end detects whether a sending sequence number of data that has been sent in the current sending period is locally stored. If a detection result is that the sending sequence number of the data that has been sent in the current sending period is not locally stored, it is determined that the data is the first piece of data in the current sending period; or if the detection result is that the sending sequence number of the data that has been sent in the current sending period is locally stored, it is determined that the data is not the first piece of data in the current sending period.

Step 203: The transmit end signs the first piece of data and a head node in a hash chain by using the private key information, to obtain a second verification code.

Optionally, the transmit end may further obtain a current second timestamp. The second timestamp is essentially a timestamp at which the transmit end sends the first piece of data. The second timestamp, the first piece of data, and the head node in the hash chain may be signed by using the private key information, to obtain the second verification code.

Optionally, a quantity of nodes included in the hash chain is equal to a quantity of pieces of data allowed to be sent in one sending period. For any two adjacent nodes in the hash chain, for ease of description, the any two adjacent nodes are respectively referred to as a first node and a second node, the first node is close to a head node in the hash chain, and the first node is deduced based on the second node.

Optionally, one sending period may correspond to one hash chain, or m sending periods may correspond to one hash chain, where m is an integer greater than 1.

When one sending period corresponds to one hash chain, before signing the first piece of data and the head node in the hash chain, the transmit end further generates a hash chain.

Alternatively, when the m sending periods correspond to one hash chain, if there is m - 1 sending periods between a sending period in which a time at which a hash chain is generated last time is located and the current sending period, before signing the first piece of data and the head node in the hash chain, the transmit end further generates a hash chain; or if a quantity of sending periods between a sending period in which a time at which a hash chain is generated last time is located and the current sending period is less than m - 1 sending periods, before signing the first piece of data and the head node in the hash chain, the transmit end obtains the hash chain that is generated last time.

An operation of generating the hash chain by the transmit end is as follows: It is assumed that N + 1 is a quantity of pieces of data allowed to be sent in a sending period. The transmit end randomly generates a random value, and uses the random value as a tail node in the hash chain. For ease of description, h₀ is used to represent the tail node. For another node in the hash chain, for ease of description, hᵢ is used to represent the another node, where i = 1, 2, ..., or N. A hash operation is performed on a node hᵢ₋₁ to obtain the node hᵢ, that is, hᵢ = H(hᵢ₋₁), where H() is a preset first hash function, and h_{N} is the head node in the hash chain.

Optionally, the preset first hash function may be a message digest algorithm version 5 (message digest algorithm 5, MD5) algorithm or the like.

In this step, the transmit end may generate a first digest message based on the first piece of data and the head node in the hash chain, and encrypt the first digest message by using the private key information, to obtain the second verification code.

Optionally, the transmit end may generate the first digest message by using the MD5 algorithm based on the first piece of data and the head node in the hash chain.

The following provides a detailed example. It is assumed that N = 3, that is, four pieces of data are allowed to be sent in the current sending period, and it is assumed that there are four pieces of data in the current sending period, that is, m₀, m₁, m₂, and m₃, where m₀, m₁, m₂, and m₃ are respectively the first piece of data, the second piece of data, the third piece of data, and the fourth piece of data to be sent in the current sending period. The hash chain generated by the transmit end includes a head node h₃, a second node h₂, a third node h₁, and a tail node h₀, where the tail node h₀ is a random value, the third node h₁ = H(h₀), the second node h₂ = H(h₁), and the head node h₃ = H(h₂).

When obtaining the first piece of data m₀ in the current sending period, the transmit end may generate the first digest message MD₀ based on the first piece of data m₀, a current second timestamp t₀, and the head node h₃, and encrypt the first digest message MD₀ by using the private key information, to obtain the second verification code e₀.

It should be noted that a computing resource for encrypting the first digest message by using the private key information to obtain the second verification code is relatively high, and therefore, computing costs when the transmit end sends the first piece of data are relatively high.

Step 204: The transmit end broadcasts a second message, where the second message includes verification information, a first verification code, the first piece of data, and the head node in the hash chain, and the verification information is the digital certificate.

Optionally, the transmit end may broadcast the second message.

Optionally, the second message may further include the second timestamp and a sending sequence number of the first piece of data in the current sending period.

Optionally, the transmit end may store the sending sequence number of the first piece of data.

It is assumed that the digital certificate is cert, so that the second message broadcast by the transmit end may include the digital certificate cert, the first verification code e₀, the first piece of data m₀, the head node h₃ of the hash chain, the second timestamp t₀, and the sending sequence number 0 of the first piece of data m₀ in the current sending period. In this way, the second message may be represented as (cert, e₀, m₀, h₃, t₀, 0).

Optionally, after sending the first piece of data, the transmit end may send target data other than the first piece of data to be sent in the current sending period according to the following procedure. The procedure may be as follows. Step 205: The transmit end obtains target data to be sent in the current sending period after the first piece of data is sent.

Because the transmit end stores a sending sequence number of data that is sent last time in the current sending period, when obtaining the target data, the transmit end may determine, based on the stored sending sequence number of the data that is sent last time in the current sending period, which data to be sent in the current sending period is the target data, and determine a sending sequence number of the target data in the current sending period.

Step 206: The transmit end obtains, from the hash chain based on a sending sequence number of the target data in the current sending period, a node corresponding to the target data.

When determining, based on the sending sequence number of the target data, that the target data is the second piece of data to be sent in the current sending period, the transmit end obtains the head node in the hash chain as the node corresponding to the target data. Alternatively, when determining, based on the sending sequence number of the target data, that the target data is data to be sent after the second piece of data, the transmit end obtains a fourth node that is located before a third node and that is adjacent to the third node in the hash chain, and uses the fourth node as the node corresponding to the target data, and the third node is a node that is sent last time in the hash chain.

For example, it is assumed that the target data is the second piece of data m₁ to be sent in the current sending period, and the transmit end obtains the head node h₃ in the hash chain as a node corresponding to the second piece of data m₁.

Step 207: The transmit end performs a hash operation on the target data and the node corresponding to the target data, to obtain the first verification code.

Optionally, the transmit end performs, by using a preset second hash function, a hash operation on the target data and the node corresponding to the target data.

Optionally, the transmit end may further obtain a current first timestamp, and the first timestamp is a timestamp at which the target data is sent. The transmit end may perform the hash operation on the target data, the node corresponding to the target data, and the first timestamp, to obtain the first verification code.

For example, it is assumed that the target data is the second piece of data m₁ to be sent in the current sending period, and the transmit end obtains the current first timestamp t₁ as a timestamp at which the second piece of data m₁ is sent. Therefore, the transmit end performs a hash operation on the second piece of data m₁, the first timestamp t₁, and a node h₃ corresponding to the second piece of data m₁, to obtain the first verification code e₁ = MAC(m₁, t₁, h₃). The MAC() is the preset second hash function, and the preset second hash function may be the MD5 algorithm, or the like. Step 208: The transmit end sends a first message, where the first message includes the target data, the node corresponding to the target data, the first verification code, and the sending sequence number of the target data.

Optionally, the transmit end may broadcast the first message.

Optionally, the first message may further include the first timestamp and/or identity information of the transmit end. For example, the identity information of the transmit end may be represented by an ID. The first message broadcast by the transmit end may include the second piece of data m₁, the node h₃ corresponding to the second piece of data m₁, the first verification code e₁, a sending sequence number 1 of the second piece of data m₁, the first timestamp t₁, and the identity information ID of the transmit end. In this way, the first message may be represented as (m₁, h₃, e₁, 1, t₁, ID).

Subsequently, the transmit end starts to send the third piece of data m₂. The transmit end obtains a current first timestamp that is t₂, a node in a hash chain that is sent last time is the head node h₃, a second node h₂ that is adjacent to the head node h₃ and that is located after the head node h₃ is obtained, and the second node h₂ is used as a node corresponding to the third piece of data m₂. Therefore, the transmit end performs a hash operation on the first timestamp t₂, the third piece of data m₂, and the node h₂ corresponding to the third piece of data m₂, to obtain a first verification code e₂ = MAC(m₂, t₂, h₂), and broadcasts the first message. In this way, the first message may be represented as (m₂, h₂, e₂, 2, t₂, ID), where 2 is a sending sequence number of the third piece of data m₂. Subsequently, the transmit end starts to send the fourth piece of data m₃. The transmit end obtains a current first timestamp that is t₃, a node in a hash chain that is sent last time is the second node h₂, a third node h₁ that is adjacent to the second node h₂ and that is located after the second node h₂ is obtained, and the third node h₁ is used as a node corresponding to the fourth piece of data m₃. Therefore, the transmit end performs a hash operation on the first timestamp t₃, the fourth piece of data m₃, and the node h₁ corresponding to the fourth piece of data m₃, to obtain a first verification code e₃ = MAC(m₃, t₃, h₁), and broadcasts the first message. In this way, the first message may be represented as (m₃, h₁, e₃, 3, t₃, ID), where 3 is a sending sequence number of the fourth piece of data m₃.

A computing resource for performing the hash operation is less than a computing resource for encrypting by using the private key. Therefore, a quantity of computing resources required when the transmit end performs the hash operation on the target data and the node corresponding to the target data to obtain the first verification code is relatively small. In this way, calculation costs required when the transmit end sends the target data other than the first piece of data are relatively low, but data security is lower than that in a manner of private key encryption. To ensure security of the target data, the transmit end further sends the node corresponding to the target data, so that the receive end verifies the node, to improve security of the target data during transmission.

In the embodiment of this application, the transmit end may directly broadcast the first message or the second message to the receive end. In this way, the first message and the second message may not be forwarded by the server, to reduce transmission latencies of the first message and the second message, and improve message sending efficiency. In addition, the private key information of the digital certificate issuer used by the transmit end may be obtained from the server in advance and stored locally. Therefore, the transmit end can broadcast the message even in an offline scenario or in a poor network environment. The first message sent by the transmit end includes the node in the hash chain corresponding to the target data, and nodes in the hash chain are in a unidirectional mapping relationship, to be specific, in the hash chain, the node hᵢ = H(hᵢ₋₁); and the node hᵢ can be deduced only from the node hᵢ₋₁, and the node hᵢ₋₁ cannot be deduced from the node hᵢ. The node corresponding to the target data is determined based on the sending sequence number of the target data. In this way, when the transmit end consecutively sends a plurality of first messages in the current sending period, the receive end can verify consecutiveness of each first message based on a node in each first message, to improve message transmission security.

Referring to FIG. 3, an embodiment of this application provides a message verification method. The method may be applied to the communications system shown in FIG. 1-1. An execution body of the method may be a receive end configured to receive the message sent in the embodiment shown in FIG. 2-1. The method includes the following steps.

Step 301: The receive end receives a message, and determines that the message is a second message, where the second message includes the first piece of data, a head node in a hash chain corresponding to the first piece of data, a second verification code, and verification information, the verification information is a digital certificate, and the digital certificate includes public key information.

Optionally, the second message may further include a second timestamp at which the first piece of data is sent and a sending sequence number of the first piece of data in a target sending period.

Optionally, a message broadcast by a transmit end may be the second message including the first piece of data, or may be a first message including another target data other than the first piece of data. After receiving the message, the receive end determines, based on a sending sequence number in the message, whether the received message is the second message or the first message.

For example, the receive end receives a message. It is assumed that the message is (cert, e₀, m₀, h₃, t₀, 0), and based on the sending sequence number 0 in the message, it is determined that the message is the second message. In the second message, cert is the digital certificate, e₀ is the second verification code, m₀ is the first piece of data, h₃ is the head node in the hash chain, t₀ is the second timestamp, and the sending sequence number of the first piece of data is 0.

Step 302: The receive end verifies the digital certificate by using public key information of a digital certificate issuer, and when the verification on the digital certificate succeeds, step 303 is performed.

Optionally, a process in which the receive end verifies the digital certificate may be as follows: The receive end obtains a digital signature from the digital certificate, and decrypts the digital signature by using the public key information of the digital certificate issuer, to obtain a third hash value; a hash operation is performed on another part other than the digital signature in the digital certificate, to obtain a fourth hash value; if the third hash value is equal to the fourth hash value, the verification on the digital certificate succeeds; or if the third hash value is not equal to the fourth hash value, the verification on the digital certificate fails.

Optionally, the receive end may obtain the public key information of the certificate issuer from a server in advance, and then locally store the public key information of the certificate issuer. Therefore, the receive end may directly decrypt the digital signature by using the locally stored public key information of the certificate issuer. Alternatively, the receive end may obtain the public key information of the certificate issuer from the server, and decrypt the digital signature by using the public key information of the certificate issuer.

Optionally, the receive end includes a message cache area. When receiving a message, the receive end may not immediately perform the operation in step 302, but caches the message in the message cache area. When a message receiving time length reaches a second threshold, digital certificates in received Z messages are verified, where the Z messages are messages that include the digital certificates and that are cached in the message cache area. When the verification on the digital certificates in the Z messages succeeds, an operation in subsequent step 303 is performed on each of the Z messages. Alternatively, when the verification on the digital certificates in the Z messages fails, the operation in step 302 is separately performed on each of the Z messages. Z is an integer greater than 0. This implements batch verification on the digital certificates in the Z messages, to improve verification efficiency.

Optionally, the second threshold may be equal to a period length of the target sending period.

Optionally, an operation in which the receive end verifies the digital certificates in the received Z messages may be as follows:
Perform a hash operation on the digital certificates in the Z messages, to obtain hash values of the digital certificates in the Z messages; calculate a product of the hash values of the digital certificates in the Z messages, to obtain a first value; calculate a product of digital signatures in the digital certificates in the Z messages, to obtain a second value; and when the e^{th} power of the second value is equal to the first value, determine that the verification on the digital certificates in the Z messages succeeds, where e is a preset constant.

For a digital certificate in each message, the digital certificate in the message and a digital signature in the digital certificate meet a first relational expression: h(cert) = *σ*^{e}, where h() is a preset hash function, cert is the digital certificate, and *σ* is the digital signature in the digital certificate.

In this step, the digital certificates that are in the Z messages and that are obtained by the receive end are respectively cert₁, cert₂, ..., and cert_{Z}. Z digital signatures are obtained from the digital certificates cert₁, cert₂, ..., and cert_{Z}, and are respectively σ₁, σ₂, ..., and σ_{Z}, respectively. If the Z digital certificates and the Z digital signatures meet the following second relational expression, verification on the digital certificates in the Z messages succeeds; or if the Z digital certificates and the Z digital signatures do not meet the following second relational expression, verification on the digital certificates in the Z messages fails.

The second relational expression is as follows: h(cert₁) * h(cert₂) ... h(certz) = (*σ*₁* *σ*₂... *σ*_{Z})^{e}, where * indicates a multiplication operation.

Optionally, for each message that does not include a digital certificate and that is in the message cache area, operations of the following step 303 and step 304 are separately performed.

Optionally, before performing this step, the receive end may further obtain a fourth timestamp at which the second message is received, obtain a second difference between the second timestamp and the fourth timestamp, and perform the operation in this step when the second difference does not exceed the first threshold.

Optionally, the receive end may use a current timestamp as the fourth timestamp at which the second message is received.

After the transmit end sends the second message, the receive end may quickly receive the second message. A difference between the second timestamp at which the second message is sent and the fourth timestamp at which the second message is received is relatively small, and is usually less than the first threshold.

If the second message is intercepted by another device other than the receive end after the transmit end sends the second message, the another device may repeatedly send the second message to the receive end. In this way, the receive end repeatedly processes the second message, to attack the receive end. Therefore, to prevent the another device from continuously attacking the receive end, the receive end determines whether the difference between the second timestamp and the fourth timestamp exceeds the first threshold. When the first threshold is exceeded, the second message is discarded, to avoid repeated processing of the second message and avoid continuous attacks from the another device; or when the first threshold is not exceeded, the operation of this step is performed. The first threshold may be a value such as 1s or 2s.

Step 303: The receive end decrypts the second verification code based on the public key information in the digital certificate, to obtain first digest information, and generates second digest information based on the first piece of data and the head node corresponding to the first piece of data.

Optionally, the receive end may perform a hash operation on the first piece of data and the head node corresponding to the first piece of data, to obtain the second digest information.

Optionally, the receive end may perform a hash operation on the first piece of data and the head node corresponding to the first piece of data by using an MD5 algorithm, to obtain the second digest information.

Optionally, when the second message includes the second timestamp, the receive end may perform a hash operation on the second timestamp, the first piece of data, and the head node corresponding to the first piece of data, to obtain the second digest information.

For example, the second message received by the receive end is (cert, e₀, m₀, h₃, t₀, 0). It is assumed that verification on the digital certificate cert succeeds, and the receive end decrypts the second verification code e₀ by using the public key information in the digital certificate cert, to obtain the first digest message that is MD₀. A hash operation is performed on the first piece of data m₀, the second timestamp t₀, and the head node h₃ corresponding to the first piece of data by using the MD5 algorithm, to obtain the second digest information MD₁.

Step 304: When the first digest information is equal to the second digest information, the verification on the first piece of data succeeds.

For example, when MD₀ = MDi, verification on the first piece of data m₀ succeeds.

Optionally, after the verification on the first piece of data succeeds, the receive end may further store the head node corresponding to the first piece of data.

Optionally, after receiving the second message, the receive end further continues to receive each first message sent by the transmit end in the target sending period. A detailed implementation process is as follows.

Step 305: The receive end receives a message, and determines that the message is a first message, where the first message includes target data, a node in a hash chain corresponding to the target data, a sending sequence number of the target data in a target sending period, and a first verification code, and the target data is data sent in the target sending period after the first piece of data is sent.

Optionally, the first message may further include a first timestamp at which the target data is sent, identity information of the transmit end, and/or the like.

Optionally, a message broadcast by the transmit end may be the second message including the first piece of data, or may be the first message including another target data other than the first piece of data. After receiving the message, the receive end determines, based on a sending sequence number in the message, whether the received message is the second message or the first message.

For example, the receive end receives a message. It is assumed that the message is (m₁, h₃, e₁, 1, t₁, ID), and based on the sending sequence number 1 in the message, it is determined that the message is the first message. In the first message, m₁ is the second piece of data in the target sending period, t₁ is the first timestamp at which the second piece of data is sent, e₁ is the first verification code, a sending sequence number of the second piece of data is 1, h₃ is a node corresponding to the second piece of data, and ID is the identity information of the transmit end.

For another example, it is assumed that the message received by the receive end is (m₂, h₂, e₂, 2, t₂, ID), and based on the sending sequence number 2 in the message, it is determined that the message is the first message. In the first message, m₂ is the third piece of data in the target sending period, t₂ is the first timestamp at which the third piece of data is sent, e₂ is the first verification code, a sending sequence number of the third piece of data is 2, and h₂ is a node corresponding to the third piece of data.

For another example, it is assumed that the message received by the receive end is (m₃, h₁, e₃, 3, t₃, ID), and based on the sending sequence number 3 in the message, it is determined that the message is the first message. In the first message, m₃ is the fourth piece of data in the target sending period, t₃ is the first timestamp at which the fourth piece of data is sent, e₃ is the first verification code, a sending sequence number of the fourth piece of data is 3, and h₁ is a node corresponding to the fourth piece of data.

Step 306: The receive end determines, based on the sending sequence number of the target data, a node corresponding to received first data, where the first data is data that is sent last by a transmit end before the target data is sent. Optionally, when the target data is the second piece of data in the target sending period, the first data is the first piece of data in the target sending period. When the target data is data in the target sending period after the second piece of data is sent, the first data is data in the target sending period after the first piece of data is sent.

For example, it is assumed that the received first message is (m₁, h₃, e₁, 1, t₁, ID); based on the sending sequence number 1 corresponding to the target data m₁, it is determined that the first data is the first piece of data m₀; and it is determined that the node corresponding to the first data is a head node h₃.

For another example, it is assumed that the received first message is (m₂, h₂, e₂, 2, t₂, ID); based on the sending sequence number 2 corresponding to the target data m₂, it is determined that the first data is the second piece of data m₁ in the target sending period; and it is determined that the node corresponding to the first data is the head node h₃. For another example, it is assumed that the received first message is (m₃, h₁, e₃, 3, t₃, ID); based on the sending sequence number 3 corresponding to the target data m₃, it is determined that the first data is the third piece of data m₂ in the target sending period; and it is determined that the node corresponding to the first data is a second node h₂ in the hash chain.

Step 307: The receive end verifies, based on the node corresponding to the first data, the node corresponding to the target data.

Optionally, when the first data is the first piece of data, and the node corresponding to the target data is equal to the node corresponding to the first piece of data, the verification on the node corresponding to the target data succeeds. For example, when the first data is the first piece of data m₀, the target data is m₁, and the node h₃ corresponding to the target data m₁ is equal to the head node h₃ corresponding to the first piece of data. Therefore, the verification on the node h₃ corresponding to the target data m₁ succeeds.

Optionally, when the first data is data sent in the target sending period after the first piece of data is sent, a hash operation is performed on the node corresponding to the target data, to obtain a second hash result, and when the second hash result is equal to the node corresponding to the first data, the verification on the node corresponding to the target data succeeds.

For example, when the first data is the second piece of data m₁ in the target sending period, the target data is m₂. A hash operation is performed on the node h₂ corresponding to the target data m₂, to obtain a second hash result H(h₂), and the second hash result H(h₂) is equal to the node h₃ corresponding to the second piece of data m₁. Therefore, the verification on the node h₂ corresponding to the target data m₂ succeeds.

For another example, when the first data is the third piece of data m₂ in the target sending period, the target data is m₃. A hash operation is performed on the node h₁ corresponding to the target data m₃, to obtain a second hash result H(h₁), and the second hash result H(h₁) is equal to the node h₂ corresponding to the third piece of data m₃. Therefore, the verification on the node h₁ corresponding to the target data m₃ succeeds.

The message received by the receive end includes the node in the hash chain corresponding to the target data, and nodes in the hash chain are in a unidirectional mapping relationship, to be specific, in the hash chain, the node hᵢ = H(hᵢ₋₁), and the node hᵢ can be deduced only from the node hᵢ₋₁, and the node hᵢ₋₁ cannot be deduced from the node hᵢ. The receive end verifies, by using a node in a hash chain that is received last time, the node corresponding to the target data. In this way, verification on whether messages consecutively received by the receive end are consecutive can be performed, to improve security.

Step 308: When the verification on the node corresponding to the target data succeeds, the receive end performs a hash operation on the target data and the node corresponding to the target data, to obtain a first hash result.

The receive end may perform, by using a preset second hash function, a hash operation on the target data and the node corresponding to the target data, to obtain the first hash result.

Optionally, when the first message includes the first timestamp, the receive end may perform a hash operation on the first timestamp, the target data, and the node corresponding to the target data, to obtain the first hash result.

Step 309: When the first hash result is equal to the first verification code, verification on the target data succeeds.

Message transmission security can be ensured by verifying the node corresponding to the target data. A speed at which the receive end verifies the node corresponding to the target data is relatively high, and a quantity of required computing resources is relatively small. A computing resource for obtaining the first hash result through the hash operation is less than a computing resource for decryption, and a speed of the hash operation is higher than that of the decryption. Therefore, not only the message transmission security is ensured, but also a verification speed is improved. For example, it is assumed that the received first message is (m₁, h₃, e₁, 1, t₁, ID), and the target data is the second piece of data m₁ in the target sending period. The receive end performs a hash operation on the first timestamp t₁, the second piece of data m₁, and the node h₃ corresponding to the second piece of data, to obtain a first hash result f₁ = MAC(t₁, m₁, h₃). When the first hash result f₁ is the same as the first verification code e₁, verification on the second piece of data m₁ succeeds.

For another example, it is assumed that the received first message is (m₂, h₂, e₂, 2, t₂, ID), and the target data is the third piece of data m₂ in the target sending period. The receive end performs a hash operation on the first timestamp t₂, the third piece of data m₂, and the node h₂ corresponding to the third piece of data, to obtain a first hash result f₂ = MAC(t₂, m₂, h₂). When the first hash result f₂ is the same as the first verification code e₂, verification on the third piece of data m₂ succeeds.

For another example, it is assumed that the received first message is (m₃, h₁, e₃, 3, t₃, ID), and the target data is the fourth piece of data m₃ in the target sending period. The receive end performs a hash operation on the first timestamp t₃, the fourth piece of data m₃, and the node h₁ corresponding to the fourth piece of data, to obtain a first hash result f₃ = MAC(t₃, m₃, h₁). When the first hash result f₃ is the same as the first verification code e₃, verification on the fourth piece of data m₃ succeeds.

Optionally, the receive end may process the first piece of data after the verification on the first piece of data succeeds, and may process the target data after the verification on the target data succeeds.

A manner in which the receive end processes the first piece of data or the target data may be playing the first piece of data or the target data, or displaying the first piece of data or the target data, or the like.

Optionally, the digital certificate in the second message also includes identity information of the transmit end, the first message includes the identity information of the transmit end, and the identity information of the transmit end includes information such as a device category, device manufacturer identifier information, a device production date, and a production sequence number of the transmit end. Therefore, the receive end can directly extract the information from the identity information of the transmit end, and can display or play the information. In this way, the receive end does not need to search the information from a network.

In the embodiment of this application, the receive end may directly receive the message broadcast by the transmit end.

In this way, the message may not be forwarded by the server, to reduce a transmission delay of the message, and improve message sending efficiency. In addition, the public key information of the digital certificate issuer used by the receive end may be obtained from the server in advance and stored locally. Therefore, the receive end can parse the message even in an offline scenario or in a poor network environment. The message sent by the transmit end includes the node in the hash chain corresponding to the target data, and nodes in the hash chain are in a unidirectional mapping relationship, to be specific, in the hash chain, the node hᵢ = H(hᵢ₋₁); and the node hᵢ can be deduced only from the node hᵢ₋₁, and the node hᵢ₋₁ cannot be deduced from the node hᵢ. The node corresponding to the target data is determined based on the sending sequence number of the target data. In this way, when the transmit end consecutively sends a plurality of messages in the current sending period, the receive end can verify consecutiveness of each message based on a node in each message, to improve message transmission security.

Referring to FIG. 4, an embodiment of this application provides a message sending method. The method may be applied to the communications system shown in FIG. 1-1. An execution body of the method is the transmit end of the communications system, and the method includes the following steps.

Step 401: The transmit end determines identity information of the transmit end as public key information, and generates private key information that matches the public key information.

In this step, the transmit end may obtain the public key information and the private key information in an identity-based signature mechanism (identity-based signature, IBS) manner. The IBS manner is as follows: The transmit end obtains identity information of the transmit end, uses the identity information as the public key information, and generates the private key information based on the identity information.

Optionally, there are a plurality of implementations in which the transmit end generates the private key information in an IBS manner. In this step, one implementation is listed as follows. The private key information generated by using the implementation includes a first private key and a second private key. The implementation may be as follows: The transmit end may receive, in advance, a generator g of a multiplication group, a prime number q of the multiplication group, and a first random number x that are broadcast by a server, and then locally store the generator g of the multiplication group, the prime number q of the multiplication group, and the first random number x. In this way, when the private key information is generated, a second random number r less than the prime number q may be generated. A first private key R is obtained based on the generator g and the second random number r, where the first private key R = g^{r}. A second private key Q is generated based on the identity information ID of the transmit end, the first private key R, the first random number x, and the second random number r, where the second private key Q = r + x * h1(ID, R), and h1() is a preset third hash function. Therefore, the generated private key information may be represented as (the first private key R, the second private key Q).

A multiplication group is preset in the server. The server may obtain the generator g and the prime number q of the multiplication group, where the prime number q is a quantity of elements included in the multiplication group; and the server may generate a first random number x less than the prime number q. Subsequently, the server broadcasts the generator g, the prime number q, and the first random number x, and the transmit end may receive and store the generator g, the prime number q, and the first random number x. In this way, when generating the private key information, the transmit end may obtain the generator g, the prime number q, and the first random number x that are locally stored, and then generate the private key information. Alternatively, when generating the private key information, the transmit end may temporarily obtain the generator g, the prime number q, and the first random number x from the server, and then generate the private key information.

The identity information of the transmit end may be set in the transmit end during delivery of the transmit end. Therefore, the transmit end may locally obtain the identity information of the transmit end.

For a structure of the identity information of the transmit end, refer to related content in step 201 in the embodiment shown in FIG. 2-1. Details are not described herein again.

Step 402: The transmit end obtains the first piece of data to be sent in a current sending period.

Optionally, the first piece of data may be data input by a user into the transmit end, and therefore, the transmit end may receive the first piece of data input by the user.

For the transmit end, the sending period is periodically cyclic. Optionally, the transmit end may define a period length, and may implement the sending period by using a timer. For example, the transmit end may start a timer, where the timer is set to start timing from zero, indicating that a sending period starts; when time counted by the timer reaches the period length, the timer is reset to start timing from zero, indicating that the sending period ends and another sending period starts; and this process repeats, to implement a periodical circulation of the sending period.

For each sending period, the transmit end may record a sending sequence number of data that has been sent in the sending period. Therefore, in the current sending period, when the transmit end receives the data input by the user, the transmit end detects whether a sending sequence number of data that has been sent in the current sending period is locally stored. If a detection result is that the sending sequence number of the data that has been sent in the current sending period is not locally stored, it is determined that the data is the first piece of data in the current sending period; or if the detection result is that the sending sequence number of the data that has been sent in the current sending period is locally stored, it is determined that the data is not the first piece of data in the current sending period.

Step 403: The transmit end signs the first piece of data and a head node in a hash chain by using the private key information, to obtain a second verification code.

Optionally, the transmit end may further obtain a current second timestamp. The second timestamp is essentially a timestamp at which the transmit end sends the first piece of data. The second timestamp, the first piece of data, and the head node in the hash chain may be signed by using the private key information, to obtain the second verification code.

Optionally, a quantity of nodes included in the hash chain is equal to a quantity of pieces of data allowed to be sent in one sending period. For any two adjacent nodes in the hash chain, for ease of description, the any two adjacent nodes are respectively referred to as a first node and a second node, the first node is close to the head node in the hash chain, and the first node is deduced based on the second node.

Optionally, one sending period may correspond to one hash chain, or m sending periods may correspond to one hash chain, where m is an integer greater than 1.

When one sending period corresponds to one hash chain, before signing the first piece of data and the head node in the hash chain, the transmit end further generates a hash chain.

Alternatively, when the m sending periods correspond to one hash chain, if there is m - 1 sending periods between a sending period in which a time at which a hash chain is generated last time is located and the current sending period, before signing the first piece of data and the head node in the hash chain, the transmit end further generates a hash chain; or if a quantity of sending periods between a sending period in which a time at which a hash chain is generated last time is located and the current sending period is less than m - 1 sending periods, before signing the first piece of data and the head node in the hash chain, the transmit end obtains the hash chain that is generated last time.

In this step, the transmit end may generate a first digest message based on the first piece of data and the head node in the hash chain, and encrypt the first digest message by using the private key information, to obtain the second verification code. The second verification code includes a first signature, a second signature, and the first private key. Optionally, when encrypting the first digest message, the transmit end generates a third random number t less than the quantity q of elements, and obtains a first signature T based on the generator g and the third random number t, where the first signature T = g'. A second signature S is generated based on the first digest information MD, the first private key R, the second private key Q, the third random value t, and the first signature T, where the second signature S = t + Q * h2(MD, T, R), and h2() is a preset fourth hash function. Therefore, the generated second verification code may be represented as (the first signature T, the second signature S, the first private key R).

Step 404: The transmit end sends a second message, where the second message includes the public key information, the second verification code, the first piece of data, and the head node in the hash chain.

Optionally, the transmit end may broadcast the second message.

Optionally, the second message may further include the second timestamp and a sending sequence number of the first piece of data in the current sending period.

Optionally, when the transmit end sends target data other than the first piece of data to be sent in the current sending period, a sending process of the transmit end is as follows:
Step 405 to step 408 are the same as step 205 to step 208, respectively. Details are not described herein again.

In the embodiment of this application, the transmit end may directly broadcast the first message or the second message to the receive end. In this way, the first message and the second message may not be forwarded by the server, to reduce transmission latencies of the first message and the second message, and improve message sending efficiency. In addition, the first message sent by the transmit end includes the node in the hash chain corresponding to the target data, nodes in the hash chain are in a unidirectional mapping relationship, and the node corresponding to the target data is determined based on the sending sequence number of the target data. In this way, when the transmit end consecutively sends a plurality of first messages in the current sending period, the receive end can verify consecutiveness of each first message based on a node in each first message, and an inconsecutive first message may be a message that is of the transmit end and that is forged by another device, so that the receive end verifies the forged first message timely, to improve message transmission security.

Referring to FIG. 5, an embodiment of this application provides a message verification method. The method may be applied to the communications system shown in FIG. 1-1. An execution body of the method may be a receive end configured to receive the message sent in the embodiment shown in FIG. 4. The method includes the following steps. Step 501: The receive end receives a message, and determines that the message is a second message, where the second message includes the first piece of data, a head node in a hash chain corresponding to the first piece of data, a second verification code, and public key information.

The public key information may be identity information of a transmit end.

Optionally, the second message may further include a second timestamp at which the first piece of data is sent and a sending sequence number of the first piece of data in a target sending period.

Optionally, a message sent by the transmit end may be the second message including the first piece of data, or may be the first message including another target data other than the first piece of data. After receiving the message, the receive end determines, based on a sending sequence number in the message, whether the received message is the second message or the first message.

Optionally, the receive end includes a message cache area. When the receive end receives a message, regardless of whether the message is the first message or the second message, the receive end may first cache the message in the message cache area. When a message receiving time length reaches a first threshold, received Z second messages are verified simultaneously, where the Z messages are second messages cached in the message cache area. When the verification performed simultaneously on the Z second messages succeeds, the first piece of data in the Z second messages may be directly processed. Alternatively, when the verification performed simultaneously on the Z second messages fails, an operation in subsequent step 502 is performed on each of the Z second messages, where Z is an integer greater than 0. This implements batch verification on second verification codes in the Z messages, to improve verification efficiency.

Optionally, that the receive end performs verification simultaneously on the received Z second messages may include the following operations from 521 to 523, which are respectively as follows:
521: The receive end obtains third values of the Z second messages based on a generator of a preset multiplication group and the second verification codes in the Z second messages.

The generator of the multiplication group may be preset in a server or may be preset in the receive end. The receive end may receive in advance a generator g and a first random number x of a multiplication group that is broadcast by the server, and may further generate a master public key value y based on the generator g and the first random number x, where the master public key value y = g^{x}.

In this way, when the operations of this step are performed, for each of the Z second messages, the second verification code of the second message may be represented as (a first signature T, a second signature S, and a first private key R). Based on the second signature S and the generator g, a third value A corresponding to the second message is obtained, where the third value A = g^{S}. The third values corresponding to all the second messages are obtained in the foregoing manner, and are respectively w₁, w₂, ..., and w_{Z}.

522: The receive end obtains a fourth value of each second message based on each second message and the second verification code in each second message.

For each second message, a hash operation is performed on the first private key R and identity information ID that is of the transmit end and that is included in the second message, to obtain a first hash value w of the second message, where w = H1(ID, R). A hash operation is performed on the second message, the identity information ID that is of the transmit end and that is included in the second message, the first signature T, and the first private key R, to obtain a second hash value v of the second message, where v = H2(Message, T, R, ID), H1() and H2() are two hash functions, and Message is the second message. Based on the first signature T, the first private key R, the master public key value y, the first hash value w, and the second hash value v, a fourth value B corresponding to the second message is obtained, where the fourth value B = T * R^{w} * y^{w} * v. The fourth values corresponding to all the second messages are obtained in the foregoing manner, and are respectively v₁, v₂, ..., and vz.

523: When a product of the third values corresponding to the Z second messages is equal to a product of the fourth values corresponding to the Z second messages, verification on the received Z second messages succeeds, that is, when w₁ * w₂ * ... * w_{Z} = v₁ * v₂ * ... * vz, the verification simultaneously performed on the received Z second messages succeeds.

Step 502: The receive end decrypts the second verification code based on the public key information, to obtain first digest information, and generates second digest information based on the first piece of data and the head node corresponding to the first piece of data.

Optionally, before performing this step, the receive end may further obtain a fourth timestamp at which the second message is received, obtain a second difference between the second timestamp and the fourth timestamp in the second message, and perform the operation in this step when the second difference does not exceed the first threshold. Optionally, the receive end may use a current timestamp as the fourth timestamp at which the second message is received.

After the transmit end sends the second message, the receive end may quickly receive the second message. A difference between the second timestamp at which the second message is sent and the fourth timestamp at which the second message is received is relatively small, and is usually less than the first threshold.

If the second message is intercepted by another device other than the receive end after the transmit end sends the second message, the another device may repeatedly send the second message to the receive end. In this way, the receive end repeatedly processes the second message, to attack the receive end. Therefore, to prevent the another device from continuously attacking the receive end, the receive end determines whether the second difference between the second timestamp and the fourth timestamp exceeds the first threshold. When the first threshold is exceeded, the second message is discarded, to avoid repeated processing of the second message and avoid continuous attacks from the another device; or when the first threshold is not exceeded, the operation of this step is performed.

Step 503: When the first digest information is equal to the second digest information, verification on the first piece of data in the second message succeeds.

Optionally, after receiving the second message, the receive end further continues to receive each first message sent by the transmit end in the target sending period. A detailed implementation process is as follows.

Step 504 to step 508 are the same as step 305 to step 309, respectively. Details are not described herein again.

In the embodiment of this application, the receive end may directly receive the message broadcast by the transmit end. In this way, the message may not be forwarded by the server, to reduce a transmission delay of the message, and improve message sending efficiency. In addition, the message sent by the transmit end includes the node in the hash chain corresponding to the target data, nodes in the hash chain are in a unidirectional mapping relationship, and the node corresponding to the target data is determined based on the sending sequence number of the target data. In this way, when the transmit end consecutively sends a plurality of messages in the current sending period, the receive end can verify consecutiveness of each message based on a node in each message, to improve message transmission security.

Referring to FIG. 6, an embodiment of this application provides a message sending apparatus 600. The apparatus 600 may be the transmit end or a part of the transmit end in any one of the foregoing embodiments, and includes:
a processing unit 601, configured to: obtain to-be-sent target data, where the target data is data to be sent in a current sending period after the first piece data is sent; obtain, from a hash chain based on a sending sequence number of the target data in the current sending period, a node corresponding to the target data, where a quantity of nodes included in the hash chain is equal to a quantity of pieces of data allowed to be sent in the current sending period; and perform a hash operation on the target data and the node corresponding to the target data, to obtain a first verification code, where the first verification code is used by a receive end to verify the target data; and
a sending unit 602, configured to send a first message, where the first message includes the target data, the node corresponding to the target data, the first verification code, and the sending sequence number of the target data. The processing unit 601 is further configured to:
randomly generate a tail node of the hash chain; and
perform a hash operation on a node hᵢ₋₁ in the hash chain, to obtain a node hᵢ in the hash chain, where i = 1, 2, ..., or N, N + 1 is the quantity of pieces of data allowed to be sent in the current sending period, a node h₀ is the tail node, and a node h_{N} is a head node in the hash chain.

Optionally, the processing unit 601 is configured to:
when determining, based on the sending sequence number of the target data, that the target data is the second piece of data to be sent in the current sending period, obtain the head node in the hash chain as the node corresponding to the target data; or
when determining, based on the sending sequence number of the target data, that the target data is data to be sent after the second piece of data, obtain a fourth node that is located before a third node and that is adjacent to the third node in the hash chain, and use the fourth node as the node corresponding to the target data, where the third node is a node that is sent last time in the hash chain.

Optionally, the first message further includes a first timestamp at which the target data is sent.

Optionally, the processing unit 601 is further configured to sign the first piece of data and the head node in the hash chain by using private key information, to obtain a second verification code, where the second verification code is used by the receive end to verify the first piece of data; and
the sending unit 602 is further configured to send a second message, where the second message includes verification information, the first piece of data, the second verification code, and a node corresponding to the first piece of data, and the verification information includes public key information matching the private key information.

Optionally, the processing unit 601 is configured to:
generate first digest information based on the first piece of data and the head node in the hash chain; and
sign the first digest information by using the private key information, to obtain the second verification code. Optionally, the second message further includes a second timestamp at which the target data is sent.

Optionally, the verification information is a digital certificate, and the digital certificate includes the public key information; or the verification information is the public key information, and the public key information is identity information of the transmit end.

In the embodiment of this application, the sending unit may directly send the first message or the second message to the receive end. In this way, the first message and the second message may not be forwarded by the server, to reduce transmission latencies of the first message and the second message, and improve message sending efficiency. In addition, the sent message includes the node in the hash chain corresponding to the target data, nodes in the hash chain are in a unidirectional mapping relationship, and the node corresponding to the target data is determined based on the sending sequence number of the target data. In this way, when the sending unit consecutively sends a plurality of messages in the current sending period, the receive end can verify consecutiveness of each message based on a node in each message, and an inconsecutive message may be a message that is of the transmit end and that is forged by another device, so that the receive end verifies the forged message timely, to improve message transmission security. Referring to FIG. 7, an embodiment of this application provides a message verification apparatus 700. The apparatus 700 may be the receive end or a part of the receive end in any one of the foregoing embodiments, and includes:
a receiving unit 701, configured to receive a first message, where the first message includes target data, a node in a hash chain corresponding to the target data, a first verification code, and a sending sequence number of the target data in a target sending period, the target data is data sent in the target sending period after the first piece of data is sent, and a quantity of nodes included in the hash chain is equal to a quantity of pieces of data allowed to be sent in the target sending period; and
a processing unit 702, configured to verify the target data based on the node corresponding to the target data, the sending sequence number corresponding to the target data, and the first verification code.

Optionally, the processing unit 702 is configured to:
determine, based on the sending sequence number of the target data, a node corresponding to received first data, where the first data is the latest data sent by a transmit end before the target data is sent;
verify, based on the node corresponding to the first data, the node corresponding to the target data;
when the verification on the node corresponding to the target data succeeds, perform a hash operation on the target data and the node corresponding to the target data, to obtain a first hash result; and
when the first hash result matches the first verification code, determine that the verification on the target data succeeds.

Optionally, the first data is the first piece of data, a node corresponding to the first piece of data is a head node in the hash chain, and the processing unit 702 is configured to: when the node corresponding to the target data is equal to the head node corresponding to the first piece of data, determine that the verification on the node corresponding to the target data succeeds.

Optionally, the first data is the data sent in the target sending period after the first piece of data is sent, and the processing unit 702 is configured to:
perform a hash operation on the node corresponding to the target data, to obtain a second hash result; and
when the second hash result is equal to the node corresponding to the first data, determine that the verification on the node corresponding to the target data succeeds.

Optionally, the first message further includes a first timestamp at which the target data is sent; and
the processing unit 702 is configured to:
obtain a first difference between the first timestamp and a third timestamp at which the target data is received; and
when the first difference does not exceed a first threshold, verify the target data based on the node corresponding to the target data, the sending sequence number corresponding to the target data, and the first verification code.

Optionally, the receiving unit 701 is further configured to receive a second message, where the second message includes the first piece of data, the head node in the hash chain corresponding to the first piece of data, a second verification code, and verification information, and the verification information includes public key information; and
the processing unit 702 is further configured to verify the first piece of data based on the second verification code and the public key information.

Optionally, the processing unit 702 is configured to:
decrypt the second verification code by using the public key information, to obtain first digest information;
generate second digest information based on the first piece of data and the head node corresponding to the first piece of data; and
when the first digest information matches the second digest information, determine that the verification on the first piece of data succeeds.

Optionally, the verification information is a digital certificate, and the digital certificate includes the public key information; and
the processing unit 702 is configured to:
verify the digital certificate by using issuer public key information of the digital certificate; and
after the verification on the digital certificate succeeds, decrypt the second verification code by using the public key information, to obtain the first digest information.

Optionally, the processing unit 702 is configured to:
cache the second message in a message cache area;
when a message receiving time length reaches a second threshold, verify digital certificates in received Z messages, where the Z messages are messages that include the digital certificates and that are cached in the message cache area, and Z is an integer greater than 0; and
when the verification on the digital certificates in the Z messages fails, verify the digital certificates by using issuer public key information of the digital certificates.

Optionally, the processing unit 702 is configured to:
perform a hash operation on the digital certificates in the Z messages, to obtain hash values of the digital certificates in the Z messages;
calculate a product of the hash values of the digital certificates in the Z messages, to obtain a first value;
calculate a product of digital signatures in the digital certificates in the Z messages, to obtain a second value; and
when the e^{th} power of the second value is equal to the first value, determine that the verification on the digital certificates in the Z messages succeeds.

Optionally, the second message further includes a second timestamp at which the first piece of data is sent and
the processing unit 702 is configured to:
obtain a second difference between the second timestamp and a fourth timestamp at which the first piece of data is received; and
when the second difference does not exceed the first threshold, verify the first piece of data based on the second verification code and the public key information.

Optionally, the processing unit 702 is configured to:
cache the second message in the message cache area;
when the message receiving time length reaches the second threshold, perform verification simultaneously on received Z second messages, where the Z second messages are second messages cached in the message cache area; and
when the verification performed simultaneously on the Z second messages fails, verify the first piece of data based on the second verification code and the public key information.

In the embodiment of this application, the receiving unit may directly receive a message sent by the transmit end. In this way, the message may not be forwarded by a server, to reduce a transmission delay of the message, and improve message sending efficiency. In addition, the message sent by the transmit end includes the node in the hash chain corresponding to the target data, nodes in the hash chain are in a unidirectional mapping relationship, and the node corresponding to the target data is determined based on the sending sequence number of the target data. In this way, when the transmit end consecutively sends a plurality of messages in the current sending period, the receiving unit can verify consecutiveness of each message based on a node in each message, to improve message transmission security.

FIG. 8 is a schematic structural diagram of a message sending apparatus 800 according to an embodiment of this application. The apparatus 800 includes at least one processor 801, a bus system 802, a memory 803, and at least one transceiver 804.

The apparatus 800 is an apparatus of a hardware structure, and may be configured to implement function modules in the apparatus 600 in FIG. 6. For example, a person skilled in the art may figure out that the processing unit 601 in the apparatus 600 shown in FIG. 6 may be implemented by the at least one processor 801 by invoking code in the memory 803, and the sending unit 602 in the apparatus 600 shown in FIG. 6 may be implemented by the transceiver 804. Optionally, the apparatus 800 may be further configured to implement a function of the transmit end according to any one of the foregoing embodiments.

Optionally, the processor 801 may be a general-purpose central processing unit (central processing unit, CPU), a microprocessor, an application-specific integrated circuit (application-specific integrated circuit, ASIC), or one or more integrated circuits for controlling program execution of the solutions of this application.

The bus system 802 may include a path to transmit information between the foregoing components.

The transceiver 804 is configured to communicate with another device or a communications network.

The memory 803 may be a read-only memory (read-only memory, ROM) or another type of static storage device capable of storing static information and instructions, or a random access memory (random access memory, RAM) or another type of dynamic storage device capable of storing information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compressed optical disc, a laser disc, an optical disc, a digital versatile disc, a Bluray disc, and the like), a magnetic disk storage medium or another magnetic storage device, or any other medium capable of including or storing expected program code in a form of an instruction or a data structure and capable of being accessed by a computer. However, the memory 803 is not limited thereto. The memory may exist independently, and is connected to the processor through a bus. Alternatively, the memory may be integrated into the processor. The memory 803 is configured to store application program code for performing the solutions of this application, and execution is controlled by the processor 801. The processor 801 is configured to execute the application program code stored in the memory 803, to implement a function in the method in this patent.

During specific implementation, in an embodiment, the processor 801 may include one or more CPUs, for example, a CPU 0 and a CPU 1 in FIG. 8.

During specific implementation, in an embodiment, the apparatus 800 may include a plurality of processors, for example, the processor 801 and a processor 807 in FIG. 8. Each of these processors may be a single-core (single-CPU) processor, or may be a multi-core (multi-CPU) processor. The processor herein may be one or more devices, circuits, and/or processing cores for processing data (for example, a computer program instruction).

During specific implementation, in an embodiment, the apparatus 800 may further include an output device 805 and an input device 806. The output device 805 communicates with the processor 801, and may display information in a plurality of manners. For example, the output device 805 may be a liquid crystal display (liquid crystal display, LCD), or the like. The input device 806 communicates with the processor 801, and may receive an input of a user in a plurality of manners. For example, the input device 806 may be a touchscreen device, or a sensor device.

FIG. 9 is a schematic structural diagram of a message verification apparatus 900 according to an embodiment of this application. The apparatus 900 includes at least one processor 901, a bus system 902, a memory 903, and at least one transceiver 904.

The apparatus 900 is an apparatus of a hardware structure, and may be configured to implement function modules in the apparatus 700 in FIG. 7. For example, a person skilled in the art may figure out that the processing unit 702 in the apparatus 700 shown in FIG. 7 may be implemented by the at least one processor 901 by invoking code in the memory 903, and the receiving unit 701 in the apparatus 700 shown in FIG. 7 may be implemented by the transceiver 904. Optionally, the apparatus 900 may be further configured to implement a function of the transmit end according to any one of the foregoing embodiments.

Optionally, the processor 901 may be a general-purpose central processing unit (central processing unit, CPU), a microprocessor, an application-specific integrated circuit (application-specific integrated circuit, ASIC), or one or more integrated circuits for controlling program execution of the solutions of this application.

The bus system 902 may include a path to transmit information between the foregoing components.

The transceiver 904 is configured to communicate with another device or a communications network.

The memory 903 may be a read-only memory (read-only memory, ROM) or another type of static storage device capable of storing static information and instructions, or a random access memory (random access memory, RAM) or another type of dynamic storage device capable of storing information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compressed optical disc, a laser disc, an optical disc, a digital versatile disc, a Bluray disc, and the like), a magnetic disk storage medium or another magnetic storage device, or any other medium capable of including or storing expected program code in a form of an instruction or a data structure and capable of being accessed by a computer. However, the memory 903 is not limited thereto. The memory may exist independently, and is connected to the processor through a bus. Alternatively, the memory may be integrated into the processor.

The memory 903 is configured to store application program code for performing the solutions of this application, and execution is controlled by the processor 801. The processor 901 is configured to execute the application program code stored in the memory 903, to implement a function in the method in this patent.

During specific implementation, in an embodiment, the processor 901 may include one or more CPUs, for example, a CPU 0 and a CPU 1 in FIG. 9.

During specific implementation, in an embodiment, the apparatus 900 may include a plurality of processors, for example, the processor 801 and a processor 907 in FIG. 9. Each of these processors may be a single-core (single-CPU) processor, or may be a multi-core (multi-CPU) processor. The processor herein may be one or more devices, circuits, and/or processing cores for processing data (for example, a computer program instruction).

During specific implementation, in an embodiment, the apparatus 900 may further include an output device 905 and an input device 906. The output device 905 communicates with the processor 901, and may display information in a plurality of manners. For example, the output device 905 may be a liquid crystal display (liquid crystal display, LCD), or the like. The input device 906 communicates with the processor 901, and may receive an input of a user in a plurality of manners. For example, the input device 806 may be a touchscreen device, or a sensor device.

Referring to FIG. 10, an embodiment of this application provides a communications system 1000. The communications system 1000 includes: the apparatus in FIG. 6 and the apparatus in FIG. 7, or the apparatus in FIG. 8 and the apparatus in FIG. 9. During implementation, the apparatus in FIG. 6 or the apparatus in FIG. 8 may be a transmit end, and the apparatus in FIG. 7 or the apparatus in FIG. 9 may be a receive end.

The sequence numbers in the foregoing embodiments of this application are merely for illustrative purposes, and are not intended to indicate priorities of the embodiments.

A person of ordinary skill in the art may understand that all or some of the steps of the embodiments may be implemented by hardware or a program indicating related hardware. The program may be stored in a computer-readable storage medium, and the storage medium may include a read-only memory, a magnetic disk, a compact disc, or the like.

The foregoing descriptions are merely optional embodiments of this application, but are not intended to limit this application, which scope of protection is solely defined by the appended claims.

## Claims

1. A message sending method, wherein the method comprises:
obtaining (205), by a transmit end, to-be-sent target data, wherein the target data is data to be sent in a current sending period after a first piece of data is sent;
randomly generating a tail node in the hash chain;
performing a hash operation on a node hᵢ₋₁ in the hash chain, to obtain a node hᵢ in the hash chain, wherein i = 1, 2, ..., or N, N + 1 is the quantity of pieces of data allowed to be sent in the current sending period, a node h₀ is the tail node, and a node h_{N} is a head node in the hash chain;
obtaining (206), by the transmit end from the hash chain based on a sending sequence number of the target data in the current sending period, a node corresponding to the target data, wherein a quantity of nodes comprised in the hash chain is equal to the quantity of pieces of data allowed to be sent in the current sending period, wherein the head node corresponds to the first piece of data, wherein nodes corresponding to all data sent by the transmit end after the first piece of data is sent are consecutive nodes and wherein the obtaining (206), from a hash chain based on a sending sequence number of the target data in the current sending period, a node corresponding to the target data comprises: when determining, based on the sending sequence number of the target data, that the target data is the second piece of data to be sent in the current sending period, obtaining the head node in the hash chain as the node corresponding to the target data; or when determining, based on the sending sequence number of the target data, that the target data is data to be sent after the second piece of data, obtaining a fourth node that is located before a third node and that is adjacent to the third node in the hash chain, and using the fourth node as the node corresponding to the target data, wherein the third node is a node that is sent last time in the hash chain;
performing (207), by the transmit end, a hash operation on the target data and the node corresponding to the target data, to obtain a first verification code, wherein the first verification code is used by a receive end to verify the target data; and
sending (208), by the transmit end, a first message, wherein the first message comprises the target data, the node corresponding to the target data, the first verification code, and the sending sequence number of the target data.

2. The method according to claim 1, wherein before the obtaining (205) to-be-sent target data, the method further comprises:
signing (203) the first piece of data and the head node in the hash chain by using private key information, to obtain a second verification code, wherein the second verification code is used by the receive end to verify the first piece of data; and
sending (204) a second message, wherein the second message comprises verification information, the first piece of data, the second verification code, and a node corresponding to the first piece of data, and the verification information comprises public key information matching the private key information.

3. The method according to claim 2, wherein the signing (203) the first piece of data and the head node in the hash chain by using private key information, to obtain a second verification code comprises:
generating first digest information based on the first piece of data and the head node in the hash chain; and
signing the first digest information by using the private key information, to obtain the second verification code.

4. A message verification method, wherein the method comprises:
receiving (305), by a receive end, a first message, wherein the first message comprises target data, a node in a hash chain corresponding to the target data, a first verification code, and a sending sequence number of the target data in a target sending period, the target data is data sent in the target sending period after the first piece of data is sent, and a quantity of nodes comprised in the hash chain is equal to a quantity of pieces of data allowed to be sent in the target sending period, a tail node in the hash chain is a node randomly generated by a transmit end, a node hᵢ in the hash chain is a node obtained by performing a hash operation on a node hᵢ₋₁ in the hash chain, wherein i = 1, 2, ..., or N, N + 1 is the quantity of pieces of data allowed to be sent in the current sending period, a node h₀ is the tail node, and a node h_{N} is a head node in the hash chain; and
verifying, by the receive end, the target data based on the node corresponding to the target data, the sending sequence number corresponding to the target data, and the first verification code, wherein the verifying the target data based on the node corresponding to the target data, the sending sequence number corresponding to the target data, and the first verification code comprises:
determining (306), based on the sending sequence number of the target data, a node corresponding to received first data, wherein the first data is the latest data sent by the transmit end before the target data is sent;
verifying (307), based on the node corresponding to the first data, the node corresponding to the target data, comprising: if the first data is the first piece of data, a node corresponding to the first piece of data is a head node in the hash chain, when the node corresponding to the target data is equal to the head node corresponding to the first piece of data, determining that the verification on the node corresponding to the target data succeeds, or, if the first data is the data sent in the target sending period after the first piece of data is sent, performing a hash operation corresponding to the hash chain on the node corresponding to the target data, to obtain a second hash result and, when the second hash result is equal to the node corresponding to the first data, determining that the verification on the node corresponding to the target data succeeds;
when the verification on the node corresponding to the target data succeeds, performing (308) a hash operation on the target data and the node corresponding to the target data, to obtain a first hash result; and
when the first hash result matches the first verification code, determining (309) that the verification on the target data succeeds.

5. The method according to claim 4, wherein before the receiving (305) a first message, the method further comprises:
receiving (301) a second message, wherein the second message comprises the first piece of data, the head node in the hash chain corresponding to the first piece of data, a second verification code, and verification information, and the verification information comprises public key information;
decrypting (303) the second verification code by using the public key information, to obtain first digest information;
generating (303) second digest information based on the first piece of data and the head node corresponding to the first piece of data; and
when the first digest information matches the second digest information, determining (304) that the verification on the first piece of data succeeds.

6. The method according to claim 5, wherein the verification information is a digital certificate, and the digital certificate comprises the public key information; and
the decrypting (303) the second verification code by using the public key information, to obtain first digest information comprises:
caching the second message in a message cache area;
when a message receiving time length reaches a second threshold, verifying digital certificates in received Z messages, wherein the Z messages are messages that comprise the digital certificates and that are cached in the message cache area, and Z is an integer greater than 0; and
when the verification on the digital certificates in the Z messages fails, verifying the digital certificates by using issuer public key information of the digital certificates; and
after the verification on the digital certificate succeeds, decrypting the second verification code by using the public key information, to obtain the first digest information.

7. The method according to claim 6, wherein the verifying digital certificates in received Z messages comprises:
performing a hash operation on the digital certificates in the Z messages, to obtain hash values of the digital certificates in the Z messages;
calculating a product of the hash values of the digital certificates in the Z messages, to obtain a first value;
calculating a product of digital signatures in the digital certificates in the Z messages, to obtain a second value; and
when the e^{th} power of the second value is equal to the first value, determining that the verification on the digital certificates in the Z messages succeeds.

8. The method according to any one of claims 4 to 7, wherein verifying the first piece of data based on the second verification code and the public key information comprises:
caching the second message in the message cache area;
when the message receiving time length reaches the second threshold, verifying simultaneously received Z second messages, wherein the Z second messages are second messages cached in the message cache area; and
when the verification performed simultaneously on the Z second messages fails, verifying the first piece of data based on the second verification code and the public key information.

9. A message sending apparatus (600, 800), wherein the apparatus comprises:
at least one processor; and
a non-transitory computer-readable storage medium coupled to the at least one processor and storing programming instructions for execution by the at least one processor, the programming instructions instruct the at least one processor to perform the method according to any one of claims 1 to 3.

10. A message verification apparatus (700, 900), wherein the apparatus comprises:
at least one processor; and
a non-transitory computer-readable storage medium coupled to the at least one processor and storing programming instructions for execution by the at least one processor, the programming instructions instruct the at least one processor to perform the method according to any one of claims 4 to 8.

11. A computer program product comprising a computer program stored in a computer-readable storage medium, wherein when the computer program is executed by a processor, the method according to any of claims 1 to 8 is carried out.

12. A non-volatile computer-readale storage medium comprising a computer program, wherein when the computer program is executed by a processor, the method according to any of claims 1 to 8 is carried out.

## Patentansprüche

1. Verfahren zum Senden einer Nachricht, wobei das Verfahren Folgendes umfasst:
Erlangen (205), durch ein Übertragungsende, zu sendender Zieldaten, wobei die Zieldaten Daten sind, die in einem aktuellen Sendezeitraum zu senden sind, nachdem ein erstes Stück Daten gesendet ist;
zufälliges Erzeugen eines Endknotens in der Hashkette;
Durchführen eines Hashvorgangs an einem Knoten hᵢ₋₁ in der Hashkette, um einen Knoten hᵢ in der Hashkette zu erlangen, wobei i = 1, 2, ... oder N, N + 1 die Anzahl von Stücken Daten ist,
der es erlaubt ist, in dem aktuellen Sendezeitraum gesendet zu werden, ein Knoten hₒ der Endknoten ist und ein Knoten h_{N} ein Kopfknoten in der Hashkette ist;
Erlangen (206), durch das Übertragungsende aus der Hashkette basierend auf einer Sendesequenznummer der Zieldaten in dem aktuellen Sendezeitraum, eines Knotens, der den Zieldaten entspricht, wobei eine Anzahl von Knoten, die in der Hashkette umfasst ist, gleich der Anzahl von Stücken Daten ist, der es erlaubt ist, in dem aktuellen Sendezeitraum gesendet zu werden,
wobei der Kopfknoten dem ersten Stück Daten entspricht, wobei Knoten, die allen Daten entsprechen, die durch das Übertragungsende gesendet werden, nachdem das erste Stück Daten gesendet wird, aufeinanderfolgende Knoten sind und wobei das Erlangen (206), aus einer Hashkette basierend auf einer Sendesequenznummer der Zieldaten in dem aktuellen Sendezeitraum,
eines Knotens, der den Zieldaten entspricht, Folgendes umfasst: bei Bestimmen, basierend auf der Sendesequenznummer der Zieldaten, dass die Zieldaten das zweite Stück Daten sind, das in dem aktuellen Sendezeitraum zu senden ist, Erlangen des Kopfknotens in der Hashkette als den Knoten, der den Zieldaten entspricht; oder bei Bestimmen, basierend auf der Sendesequenznummer der Zieldaten, dass die Zieldaten Daten sind, die nach dem zweiten Stück Daten zu senden sind, Erlangen eines vierten Knotens, der sich vor einem dritten Knoten befindet und
der in der Hashkette zu dem dritten Knoten benachbart ist, und Verwenden des vierten Knotens als den Knoten, der den Zieldaten entspricht, wobei der dritte Knoten ein Knoten ist, der zuletzt in der Hashkette gesendet wird;
Durchführen (207), durch das Übertragungsende, eines Hashvorgangs an den Zieldaten und dem Knoten, der den Zieldaten entspricht, um einen ersten Verifizierungscode zu erlangen,
wobei der erste Verifizierungscode durch ein Empfangsende dazu verwendet wird, die Zieldaten zu verifizieren; und
Senden (208), durch das Übertragungsende, einer ersten Nachricht, wobei die erste Nachricht die Zieldaten, den Knoten,
der den Zieldaten entspricht, den ersten Verifizierungscode und die Sendesequenznummer der Zieldaten umfasst.

2. Verfahren nach Anspruch 1, wobei das Verfahren vor dem Erlangen (205) zu sendender Zieldaten ferner Folgendes umfasst:
Signieren (203) des ersten Stücks Daten und des Kopfknotens in der Hashkette unter Verwendung privater Schlüsselinformationen, um einen zweiten Verifizierungscode zu erlangen, wobei der zweite Verifizierungscode durch das Empfangsende dazu verwendet wird, das erste Stück Daten zu verifizieren; und
Senden (204) einer zweiten Nachricht, wobei die zweite Nachricht Verifizierungsinformationen, das erste Stück Daten, den zweiten Verifizierungscode und einen Knoten, der dem ersten Stück Daten entspricht, umfasst und die Verifizierungsinformationen öffentliche Schlüsselinformationen umfassen, die mit den privaten Schlüsselinformationen übereinstimmen.

3. Verfahren nach Anspruch 2, wobei das Signieren (203) des ersten Stücks Daten und des Kopfknotens in der Hashkette unter Verwendung privater Schlüsselinformationen, um einen zweiten Verifizierungscode zu erlangen, Folgendes umfasst:
Erzeugen erster Prüfinformationen basierend auf dem ersten Stück Daten und dem Kopfknoten in der Hashkette;
und Signieren der ersten Prüfinformationen unter Verwendung der privaten Schlüsselinformationen, um den zweiten Verifizierungscode zu erlangen.

4. Verfahren zur Verifizierung einer Nachricht, wobei das Verfahren Folgendes umfasst:
Empfangen (305), durch ein Empfangsende, einer ersten Nachricht, wobei die erste Nachricht Zieldaten, einen Knoten in einer Hashkette, der den Zieldaten entspricht, einen ersten Verifizierungscode und eine Sendesequenznummer der Zieldaten in einem Zielsendezeitraum umfasst, die Zieldaten Daten sind, die in dem Zielsendezeitraum gesendet werden, nachdem das erste Stück Daten gesendet wird, und eine Anzahl von Knoten, die in der Hashkette umfasst ist, gleich einer Anzahl von Stücken Daten ist, der es erlaubt ist, in dem Zielsendezeitraum gesendet zu werden, ein Endknoten in der Hashkette ein Knoten ist, der durch ein Übertragungsende zufällig erzeugt wird, ein Knoten hᵢ in der Hashkette ein Knoten ist, der durch Durchführen eines Hashvorgangs an einem Knoten hᵢ₋₁ in der Hashkette erlangt wird, wobei i = 1, 2, ... oder N, N + 1 die Anzahl von Stücken Daten ist, der es erlaubt ist, in dem aktuellen Sendezeitraum gesendet zu werden, ein Knoten hₒ der Endknoten ist und ein Knoten h_{N} ein Kopfknoten in der Hashkette ist; und
Verifizieren, durch das Empfangsende, der Zieldaten basierend auf dem Knoten, der den Zieldaten entspricht, der Sendesequenznummer, die den Zieldaten entspricht, und dem ersten Verifizierungscode, wobei das Verifizieren der Zieldaten basierend auf dem Knoten, der den Zieldaten entspricht, der Sendesequenznummer, die den Zieldaten entspricht, und dem ersten Verifizierungscode Folgendes umfasst:
Bestimmen (306), basierend auf der Sendesequenznummer der Zieldaten, eines Knotens, der empfangenen ersten Daten entspricht, wobei die ersten Daten die letzten Daten sind, die durch das Übertragungsende gesendet werden, bevor die Zieldaten gesendet werden;
Verifizieren (307), basierend auf dem Knoten, der den ersten Daten entspricht, des Knotens, der den Zieldaten entspricht, Folgendes umfassend: falls die ersten Daten das erste Stück Daten sind, ist ein Knoten, der dem ersten Stück Daten entspricht, ein Kopfknoten in der Hashkette, wenn der Knoten,
der den Zieldaten entspricht, gleich dem Kopfknoten ist, der dem ersten Stück Daten entspricht, Bestimmen, dass die Verifizierung an dem Knoten, der den Zieldaten entspricht, erfolgreich ist, oder, falls die ersten Daten die Daten sind, die in dem Zielsendezeitraum gesendet werden, nachdem das erste Stück Daten gesendet wird, Durchführen eines Hashvorgangs, der der Hashkette entspricht, an dem Knoten, der den Zieldaten entspricht, um ein zweites Hashergebnis zu erlangen, und, wenn das zweite Hashergebnis gleich dem Knoten ist, der den ersten Daten entspricht, Bestimmen, dass die Verifizierung an dem Knoten, der den Zieldaten entspricht, erfolgreich ist;
wenn die Verifizierung an dem Knoten, der den Zieldaten entspricht, erfolgreich ist, Durchführen (308) eines Hashvorgangs an den Zieldaten und dem Knoten, der den Zieldaten entspricht, um ein erstes Hashergebnis zu erlangen; und
wenn das erste Hashergebnis mit dem ersten Verifizierungscode übereinstimmt, Bestimmen (309), dass die Verifizierung an den Zieldaten erfolgreich ist.

5. Verfahren nach Anspruch 4, wobei das Verfahren vor dem Empfangen (305) einer ersten Nachricht ferner Folgendes umfasst:
Empfangen (301) einer zweiten Nachricht, wobei die zweite Nachricht das erste Stück Daten, den Kopfknoten in der Hashkette, der dem ersten Stück Daten entspricht, einen zweiten Verifizierungscode und Verifizierungsinformationen umfasst, und die Verifizierungsinformationen öffentliche Schlüsselinformationen umfassen;
Entschlüsseln (303) des zweiten Verifizierungscodes unter Verwendung der öffentlichen Schlüsselinformationen, um erste Prüfinformationen zu erlangen;
Erzeugen (303) zweiter Prüfinformationen basierend auf dem ersten Stück Daten und dem Kopfknoten, der dem ersten Stück Daten entspricht; und
wenn die ersten Prüfinformationen mit den zweiten Prüfinformationen übereinstimmen, Bestimmen (304), dass die Verifizierung des ersten Stücks Daten erfolgreich ist.

6. Verfahren nach Anspruch 5, wobei die Verifizierungsinformationen ein digitales Zertifikat sind und das digitale Zertifikat die öffentlichen Schlüsselinformationen umfasst; und
das Entschlüsseln (303) des zweiten Verifizierungscodes unter Verwendung der öffentlichen Schlüsselinformationen, um erste Prüfinformationen zu erlangen, Folgendes umfasst:
Zwischenspeichern der zweiten Nachricht in einem Nachrichtenzwischenspeicherbereich;
wenn eine Nachrichtenempfangszeitdauer einen zweiten Schwellenwert erreicht, Verifizieren digitaler Zertifikate in empfangenen Z Nachrichten, wobei die Z Nachrichten Nachrichten sind, die die digitalen Zertifikate umfassen und die in dem Nachrichtenzwischenspeicherbereich zwischengespeichert sind, und Z eine Ganzzahl größer als 0 ist; und
wenn die Verifizierung an den digitalen Zertifikaten in den Z Nachrichten fehlschlägt, Verifizieren der digitalen Zertifikate unter Verwendung öffentlicher Ausstellerschlüsselinformationen der digitalen Zertifikate; und
nachdem die Verifizierung an den digitalen Zertifikaten erfolgreich ist, Entschlüsseln des zweiten Verifizierungscodes unter Verwendung der öffentlichen Schlüsselinformationen, um die ersten Prüfinformationen zu erlangen.

7. Verfahren nach Anspruch 6, wobei das Verifizieren digitaler Zertifikate in empfangenen Z Nachrichten Folgendes umfasst:
Durchführen eines Hashvorgangs an den digitalen Zertifikaten in den Z Nachrichten, um Hashwerte der digitalen Zertifikate in den Z Nachrichten zu erlangen;
Berechnen eines Produkts der Hashwerte der digitalen Zertifikate in den Z Nachrichten, um einen ersten Wert zu erlangen;
Berechnen eines Produkts digitaler Signaturen in den digitalen Zertifikaten in den Z Nachrichten, um einen zweiten Wert zu erlangen; und
wenn die e-te Potenz des zweiten Werts gleich dem ersten Wert ist, Bestimmen, dass die Verifizierung an den digitalen Zertifikaten in den Z Nachrichten erfolgreich ist.

8. Verfahren nach einem der Ansprüche 4 bis 7, wobei Verifizieren des ersten Stücks Daten basierend auf dem zweiten Verifizierungscode und den öffentlichen Schlüsselinformationen Folgendes umfasst:
Zwischenspeichern der zweiten Nachricht in dem Nachrichtenzwischenspeicherbereich;
wenn die Nachrichtenempfangszeitdauer den zweiten Schwellenwert erreicht, Verifizieren gleichzeitig empfangener Z zweiter Nachrichten, wobei die Z zweiten Nachrichten zweite Nachrichten sind, die in dem Nachrichtenzwischenspeicherbereich zwischengespeichert sind; und
wenn die Verifizierung, die gleichzeitig an den Z zweiten Nachrichten durchgeführt wird, fehlschlägt, Verifizieren des ersten Stücks Daten basierend auf dem zweiten Verifizierungscode und den öffentlichen Schlüsselinformationen.

9. Vorrichtung (600, 800) zum Senden einer Nachricht, wobei die Vorrichtung Folgendes umfasst:
mindestens einen Prozessor; und
ein nichttransitorisches, computerlesbares Speichermedium, das an den mindestens einen Prozessor gekoppelt ist und Programmieranweisungen zur Ausführung durch den mindestens einen Prozessor speichert, wobei die Programmieranweisungen den mindestens einen Prozessor anweisen, das Verfahren nach einem der Ansprüche 1 bis 3 durchzuführen.

10. Vorrichtung (700, 900) zur Verifizierung einer Nachricht, wobei die Vorrichtung Folgendes umfasst:
mindestens einen Prozessor; und
ein nichttransitorisches, computerlesbares Speichermedium, das an den mindestens einen Prozessor gekoppelt ist und Programmieranweisungen zur Ausführung durch den mindestens einen Prozessor speichert, wobei die Programmieranweisungen den mindestens einen Prozessor anweisen, das Verfahren nach einem der Ansprüche 4 bis 8 durchzuführen.

11. Computerprogrammprodukt, umfassend ein Computerprogramm, das in einem computerlesbaren Speichermedium gespeichert ist, wobei, wenn das Computerprogramm durch einen Prozessor ausgeführt wird, das Verfahren nach einem der Ansprüche 1 bis 8 durchgeführt wird.

12. Nichtflüchtiges, computerlesbares Speichermedium, umfassend ein Computerprogramm, wobei, wenn das Computerprogramm durch einen Prozessor ausgeführt wird, das Verfahren nach einem der Ansprüche 1 bis 8 durchgeführt wird.

## Revendications

1. Procédé d'envoi de message, dans lequel le procédé comprend :
l'obtention (205), par une extrémité de transmission, de données cibles à envoyer, dans lequel les données cibles sont des données à envoyer pendant une période d'envoi en cours après l'envoi d'un premier élément de données ;
la génération de manière aléatoire d'un noeud de queue dans la chaîne de hachage ;
la réalisation d'une opération de hachage sur un noeud hᵢ₋₁ dans la chaîne de hachage, pour obtenir un noeud hᵢ dans la chaîne de hachage, dans lequel i = 1, 2, ..., ou N, N + 1 est la quantité d'éléments de données autorisés pour être envoyés pendant la période d'envoi en cours, un noeud hₒ est le noeud de queue et un noeud h_{N} est un noeud de tête dans la chaîne de hachage ;
l'obtention (206), par l'extrémité de transmission à partir de la chaîne de hachage sur la base d'un numéro de séquence d'envoi des données cibles pendant la période d'envoi en cours, d'un noeud correspondant aux données cibles, dans lequel une quantité de noeuds compris dans la chaîne de hachage est égale à la quantité d'éléments de données autorisés pour être envoyés pendant la période d'envoi en cours, dans lequel le noeud de tête correspond au premier élément de données, dans lequel les noeuds correspondant à toutes les données envoyées par l'extrémité de transmission après l'envoi du premier élément de données sont des noeuds consécutifs et dans lequel l'obtention (206), à partir d'une chaîne de hachage basée sur un numéro de séquence d'envoi des données cibles pendant la période d'envoi en cours, d'un noeud correspondant aux données cibles comprend : lors de la détermination, sur la base du numéro de séquence d'envoi des données cibles, que les données cibles sont le second élément de données à envoyer pendant la période d'envoi en cours, l'obtention du noeud de tête dans la chaîne de hachage en tant que noeud correspondant aux données cibles ; ou lors de la détermination, sur la base du numéro de séquence d'envoi des données cibles, que les données cibles sont des données à envoyer après le second élément de données, l'obtention d'un quatrième noeud qui est situé avant un troisième noeud et qui est adjacent au troisième noeud dans la chaîne de hachage, et l'utilisation du quatrième noeud comme noeud correspondant aux données cibles, dans lequel le troisième noeud est un noeud qui est envoyé la dernière fois dans la chaîne de hachage ;
la réalisation (207), par l'extrémité de transmission, d'une opération de hachage sur les données cibles et le noeud correspondant aux données cibles, pour obtenir un premier code de vérification, dans lequel le premier code de vérification est utilisé par une extrémité de réception pour vérifier les données cibles ; et
l'envoi (208), par l'extrémité de transmission, d'un premier message, dans lequel le premier message comprend les données cibles, le noeud correspondant aux données cibles, le premier code de vérification et le numéro de séquence d'envoi des données cibles.

2. Procédé selon la revendication 1, dans lequel avant l'obtention (205) des données cibles à envoyer, le procédé comprend également :
la signature (203) du premier élément de données et du noeud de tête dans la chaîne de hachage à l'aide d'informations de clé privée, pour obtenir un second code de vérification, dans lequel le second code de vérification est utilisé par l'extrémité de réception pour vérifier le premier élément de données ; et
l'envoi (204) d'un second message, dans lequel le second message comprend des informations de vérification, le premier élément de données, le second code de vérification et un noeud correspondant au premier élément de données, et les informations de vérification comprennent des informations de clé publique correspondant aux informations de clé privée.

3. Procédé selon la revendication 2, dans lequel la signature (203) du premier élément de données et du noeud de tête dans la chaîne de hachage à l'aide d'informations de clé privée, pour obtenir un second code de vérification, comprend :
la génération de premières informations de résumé sur la base du premier élément de données et du noeud de tête dans la chaîne de hachage ; et
la signature des premières informations de résumé à l'aide des informations de clé privée, pour obtenir le second code de vérification.

4. Procédé de vérification de message, dans lequel le procédé comprend :
la réception (305), par une extrémité de réception, d'un premier message, dans lequel le premier message comprend des données cibles, un noeud dans une chaîne de hachage correspondant aux données cibles, un premier code de vérification et un numéro de séquence d'envoi des données cibles pendant une période d'envoi cible, les données cibles sont des données envoyées pendant la période d'envoi cible après l'envoi du premier élément de données,
et une quantité de noeuds compris dans la chaîne de hachage est égale à une quantité d'éléments de données autorisés pour être envoyés pendant la période d'envoi cible, un noeud de queue dans la chaîne de hachage est un noeud généré de manière aléatoire par une extrémité de transmission, un noeud hᵢ dans la chaîne de hachage est un noeud obtenu en réalisant une opération de hachage sur un noeud hᵢ₋₁ dans la chaîne de hachage, dans lequel i = 1, 2, ..., ou N, N + 1 est la quantité d'éléments de données autorisés pour être envoyés pendant la période d'envoi en cours, un noeud hₒ est le noeud de queue et un noeud h_{N} est un noeud de tête dans la chaîne de hachage ; et
la vérification, par l'extrémité de réception, des données cibles sur la base du noeud correspondant aux données cibles, du numéro de séquence d'envoi correspondant aux données cibles et du premier code de vérification, dans lequel la vérification des données cibles sur la base du noeud correspondant aux données cibles, du numéro de séquence d'envoi correspondant aux données cibles et du premier code de vérification comprend :
la détermination (306), sur la base du numéro de séquence d'envoi des données cibles, d'un noeud correspondant aux premières données reçues, dans lequel les premières données sont les dernières données envoyées par l'extrémité de transmission avant l'envoi des données cibles ;
la vérification (307), sur la base du noeud correspondant aux premières données, du noeud correspondant aux données cibles, comprenant : si les premières données sont le premier élément de données, un noeud correspondant au premier élément de données est un noeud de tête dans la chaîne de hachage, lorsque le noeud correspondant aux données cibles est égal au noeud de tête correspondant au premier élément de données, la détermination que la vérification sur le noeud correspondant aux données cibles réussit, ou, si les premières données sont les données envoyées pendant la période d'envoi cible après l'envoi du premier élément de données, la réalisation d'une opération de hachage correspondant à la chaîne de hachage sur le noeud correspondant aux données cibles, pour obtenir un second résultat de hachage et, lorsque le second résultat de hachage est égal au noeud correspondant aux premières données, la détermination que la vérification sur le noeud correspondant aux données cibles réussit ;
lorsque la vérification sur le noeud correspondant aux données cibles réussit, la réalisation (308) d'une opération de hachage sur les données cibles et le noeud correspondant aux données cibles, pour obtenir un premier résultat de hachage ; et
lorsque le premier résultat de hachage correspond au premier code de vérification, la détermination (309) que la vérification sur les données cibles réussit.

5. Procédé selon la revendication 4, dans lequel avant la réception (305) d'un premier message, le procédé comprend également :
la réception (301) d'un second message, dans lequel le second message comprend le premier élément de données, le noeud de tête dans la chaîne de hachage correspondant au premier élément de données, un second code de vérification et des informations de vérification, et les informations de vérification comprennent des informations de clé publique ;
le déchiffrage (303) du second code de vérification à l'aide des informations de clé publique, pour obtenir des premières informations de résumé ;
la génération (303) de secondes informations de résumé sur la base du premier élément de données et du noeud de tête correspondant au premier élément de données ; et
lorsque les premières informations de résumé correspondent aux secondes informations de résumé, la détermination (304) que la vérification sur le premier élément de données réussit.

6. Procédé selon la revendication 5, dans lequel les informations de vérification sont un certificat numérique, et le certificat numérique comprend les informations de clé publique ; et
le déchiffrage (303) du second code de vérification à l'aide des informations de clé publique, pour obtenir des premières informations de résumé, comprend :
la mise en cache du second message dans une zone de cache de messages ;
lorsqu'une durée de réception de message atteint un second seuil, la vérification des certificats numériques dans Z messages reçus, dans lequel les Z messages sont des messages qui comprennent les certificats numériques et qui sont mis en cache dans la zone de cache de messages, et Z est un nombre entier supérieur à 0 ; et
lorsque la vérification des certificats numériques dans les Z messages échoue, la vérification des certificats numériques à l'aide d'informations de clé publique d'émetteur des certificats numériques ; et
après la réussite de la vérification du certificat numérique, le déchiffrage du second code de vérification à l'aide des informations de clé publique, pour obtenir les premières informations de résumé.

7. Procédé selon la revendication 6, dans lequel la vérification des certificats numériques dans les Z messages reçus comprend :
la réalisation d'une opération de hachage sur les certificats numériques dans les Z messages, pour obtenir des valeurs de hachage des certificats numériques dans les Z messages ;
le calcul d'un produit des valeurs de hachage des certificats numériques dans les Z messages, pour obtenir une première valeur ;
le calcul d'un produit de signatures numériques dans les certificats numériques dans les Z messages, pour obtenir une seconde valeur ; et
lorsque la eième puissance de la seconde valeur est égale à la première valeur, la détermination que la vérification des certificats numériques dans les Z messages réussit.

8. Procédé selon l'ne quelconque des revendications 4 à 7, dans lequel la vérification du premier élément de données sur la base du second code de vérification et des informations de clé publique comprend :
la mise en cache du second message dans la zone de cache de messages ;
lorsque la durée de réception de message atteint le second seuil, la vérification simultanée des Z seconds messages reçus, dans lequel les Z seconds messages sont des seconds messages mis en cache dans la zone de cache de messages ; et
lorsque la vérification réalisée simultanément sur les Z seconds messages échoue, la vérification du premier élément de données sur la base du second code de vérification et des informations de clé publique.

9. Appareil d'envoi de message (600, 800), dans lequel l'appareil comprend :
au moins un processeur ; et
un support de stockage non transitoire lisible par ordinateur couplé à l'au moins un processeur et stockant des instructions de programmation destinées à être exécutées par l'au moins un processeur, les instructions de programmation commandent à l'au moins un processeur de réaliser le procédé selon l'une quelconque des revendications 1 à 3.

10. Appareil de vérification de message (700, 900), dans lequel l'appareil comprend :
au moins un processeur ; et
un support de stockage non transitoire lisible par ordinateur couplé à l'au moins un processeur et stockant des instructions de programmation destinées à être exécutées par l'au moins un processeur, les instructions de programmation commandent à l'au moins un processeur de réaliser le procédé selon l'une quelconque des revendications 4 à 8.

11. Produit programme informatique comprenant un programme informatique stocké sur un support de stockage lisible par ordinateur, dans lequel lorsque le programme informatique est exécuté par un processeur, le procédé selon l'une quelconque des revendications 1 à 8 est mis en oeuvre.

12. Support de stockage non volatil lisible par ordinateur, comprenant un programme informatique, dans lequel lorsque le programme informatique est exécuté par un processeur, le procédé selon l'une quelconque des revendications 1 à 8 est mis en oeuvre.
